(19) Europäisches Patentamt
European Patent Office
Office européen des brevets

(11) **EP 2 395 420 B1**

(12) **EUROPEAN PATENT SPECIFICATION**

(45) Date of publication and mention of the grant of the patent:
**11.07.2018 Bulletin 2018/28**

(21) Application number: **10738331.7**

(22) Date of filing: **02.02.2010**

(51) Int Cl.:
*G06F 3/01* *(2006.01)*    *G06F 3/03* *(2006.01)*
*H04N 21/422* *(2011.01)*    *H04N 21/4223* *(2011.01)*
*H04N 21/488* *(2011.01)*    *H04N 21/442* *(2011.01)*

(86) International application number:
**PCT/JP2010/000595**

(87) International publication number:
**WO 2010/089989 (12.08.2010 Gazette 2010/32)**

(54) **INFORMATION DISPLAY DEVICE AND INFORMATION DISPLAY METHOD**

INFORMATIONSANZEIGEVORRICHTUNG UND INFORMATIONSANZEIGEVERFAHREN

DISPOSITIF ET PROCÉDÉ D'AFFICHAGE D'INFORMATIONS

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **05.02.2009 JP 2009024662**

(43) Date of publication of application:
**14.12.2011 Bulletin 2011/50**

(73) Proprietor: **Panasonic Intellectual Property Corporation
of America
Torrance, CA 90503 (US)**

(72) Inventors:
• **SAKATA, Kotaro
Osaka-shi
Osaka 540-6207 (JP)**

• **MAEDA, Shigenori
Osaka-shi
Osaka 540-6207 (JP)**

(74) Representative: **Vigand, Philippe et al
Novagraaf International SA
Chemin de l'Echo 3
1213 Onex - Genève (CH)**

(56) References cited:
**WO-A1-2006/009972    WO-A2-2008/012716
JP-A- 2000 250 677    JP-A- 2002 229 918
JP-A- 2004 220 179    JP-A- 2005 157 134
JP-A- 2005 227 522    JP-A- 2006 178 842
JP-A- 2007 133 305    US-A1- 2004 098 462
US-A1- 2006 093 998**

**Description**

[Technical Field]

The present invention relates to information display apparatuses which display, on a screen, notification information to be presented to users.

[Background Art]

Thanks to larger and thinner displays, TVs are gradually introduced to new and prospective uses including simultaneously providing many pieces of information and enumerating a large amount of information, as well as simply delivering broadcast content. As an example of the development of the TVs, proposed is a TV having a display covering an entire wall of the living room in a house. Such a TV can present various kinds of information closely related to daily life with appropriate timing.

In addition, the widespread use of home networking makes possible a TV, a Blu-ray Disc (BD) recorder and a network camera interacting with each other. Hence the user can operate two or more appliances with one remote control. Furthermore, the user can check images taken by the network camera on the TV screen. In addition to the above appliances, domestic appliances including a washing machine and a microwave might as well be linked to the home network. Hence the user can monitor the state of each appliance on the TV. In other words, the network-connected appliances interact with each other, and provide notification information from each of the appliances to a display apparatus, such as a TV. Thus the user can obtain information on various appliances, simply watching TV.

In order to provide the notification information to the user, a conventional technique provides a technique to control timing to present the notification information to the user (See Patent Literature 1, for example).In the technique in Patent Literature 1, the notification information is presented to the user based on a policy for determining a suitable time of providing the notification information and a state of the user including the user current cost of interruption.

There is another technique to provide information to a user based on his or her effective visual field (See Patent Literature 2). The technique in Patent Literature 2 involves adjusting the size of an image according to a display position of an image displayed on the screen, and a distance to the center of the visual field. This adjustment prevents the user from having different recognition of the image between the center and a periphery of the visual field. Other techniques are known from the following documents:

Document US 2004/0098462 A1 discloses notification systems which place notifications on the display of a user based on e.g. active application, location of cursor, gaze point of a user. The notification is generally placed next to the point of focus and can be brought to focus if urgent and the user is not reacting to it.

Document WO 2006/009972 A1 discloses a multi display system, which checks if user is gazing at a display and/or window. The system can either prepare reports about what happens on the displays that the user is not viewing at certain times, or can bring an important window to the attention of the user if necessary.

[Citation List]

[Patent Literature]

[PTL 1] Japanese Unexamined Patent Application Publication No. 2004-266815
Japanese Unexamined Patent Application Publication No. 2001-318747

[Summary of Invention]

[Technical Problem]

Suppose a user is watching content. When notification information unrelated to the content suddenly appears on the screen, the user receives an odd impression by its sudden appearance and feels annoyed. The above technique cannot solve such a problem.

The present invention is conceived in view of the above problem and has an object to provide an information display apparatus which is capable of presenting notification information to the user without giving the user an odd impression.

[Solution to Problem]

In order to achieve the above object, an information display apparatus according to claim 1 is provided.

Thanks to this structure, the initial display position of the notification information is determined to be located outside the effective visual field area. Accordingly, the information display apparatus successfully reduces an odd impression the user may receive when the notification information is initially displayed. Furthermore, changing the display position or the display state of the displayed notification information, the information display apparatus can casually remind the user of the notification information. Hence the information display apparatus successfully presents the notification information without giving an odd impression to the user.

Preferably, the user state detecting unit detects, as the user state, a position of a gazing point of the user, the gazing point being found on a plane including the screen, and the application control unit determines the initial display position, such that as the degree of concentration estimated by the degree-of-concentration estimating unit is smaller, the initial display position is located farther from a position determined by the position of the gazing point detected by the user state detecting unit.

This structure allows the initial display position to be determined to be located farther from the position determined by the position of the gazing point as the degree of concentration is smaller. Accordingly, the information display apparatus can easily determine the initial display position to be located outside the effective visual field area.

Preferably, the application control unit further determines a moving speed, such that the moving speed is faster as the degree of concentration estimated by the degree-of-concentration estimating unit is greater, and the rendering unit moves, to change, the display position of the notification information at the moving speed determined by the application control unit.

Thanks to this structure, the moving speed of the display position of the notification information is determined based on the degree of concentration. Hence the information display apparatus successfully presents the notification information without giving an odd impression to the user.

Preferably, the user state detecting unit detects, as the user state, a position of a gazing point of the user, the gazing point being found on a plane including the screen, and the rendering unit moves, to change, the display position of the notification information toward a position representing positions of gazing points detected by the user state detecting unit within a predetermined time period.

This structure allows the display position of the notification information to be moved toward the position representing the positions of the gazing points detected within a predetermined time period. Hence the information display apparatus successfully presents the notification information without giving an odd impression to the user.

Preferably, the rendering unit moves, to change, the display position of the notification information toward a predetermined position within a display area of content displayed on the screen.

This structure allows the display position of the notification information to be moved toward the position within the display area of the content. Hence the information display apparatus successfully presents the notification information without giving an odd impression to the user.

Preferably, the rendering unit moves, to change, the display position of the notification information toward a position which is located (i) outside a display area of content displayed on the screen and (ii) near a boarder of the display area of the content.

This structure allows the display position of the notification information to be moved toward the position which is (i) located outside the display area of the content and (ii) near a boarder of the display area of the content. Hence the information display apparatus successfully presents the notification information without giving an odd impression to the user.

Preferably, the application control unit further determines a size of a display area, such that the size is larger as the degree of concentration estimated by the degree-of-concentration estimating unit is greater, and, when displaying the notification information at the initial display position determined by the application control unit, the rendering unit displays the notification information in the display area having the determined size.

This structure allows the notification information to be displayed in a size which is based on the degree of concentration. Hence the information display apparatus successfully presents the notification information without giving an odd impression to the user.

Preferably, the information display apparatus according the aspect of the present invention further includes a degree-of-association estimating unit which estimates a degree of association indicating to what degree the notification information is associated with content displayed on the screen, wherein the user state detecting unit detects, as the user state, a position of a gazing point of the user, the gazing point being found on a plane including the screen, and the application control unit determines the initial display position, such that as the degree of association estimated by the degree-of-association estimating unit is smaller, the initial display position is located farther from a position determined by the position of the gazing point detected by the user state detecting unit.

Thanks to this structure, the initial display position of the notification information is determined based on the degree of association between the notification information and the content. Hence the information display apparatus successfully presents the notification information without giving an odd impression to the user.

Preferably, the application control unit further determines a moving speed, such that the moving speed is faster as the degree of concentration estimated by the degree-of-concentration estimating unit is greater, and the rendering unit moves, to change, the display position of the notification information at the moving speed determined by the application control unit.

Thanks to this structure, the moving speed of the notification information is determined based on the degree of association between the notification information and the content. Hence the information display apparatus successfully presents the notification information without giving an odd impression to the user.

Preferably, the information display apparatus according to the aspect of the present invention further includes a degree-of-importance or -urgency obtaining unit which obtains a degree of importance indicating to what degree the notification information is important or a degree of urgency indicating to what degree the notification information is urgent, wherein the application control unit determines the initial display position, such that as the degree of importance or the degree of urgency obtained by the degree-of-importance or -urgency obtaining unit is smaller, the initial display position is located farther from a position determined by a position of a gazing point detected by the user state detecting unit.

Thanks to this structure, the initial display position of the notification information is determined based on the degree of importance or the degree of urgency of the notification information. Hence the information display apparatus successfully presents notification information having a greater degree of importance or a greater degree of urgency as fast as possible.

Preferably, the application control unit further determines a moving speed, such that the moving speed is faster as the degree of importance or the degree of urgency obtained by the degree-of-importance or -urgency obtaining unit is greater, and the rendering unit moves, to change, the display position of the notification information at the determined moving speed.

Thanks to this structure, the moving speed of the notification information is determined based on the degree of importance or the degree of urgency of the notification information. Hence the information display apparatus successfully presents notification information having a greater degree of importance or a greater degree of urgency as fast as possible.

Preferably, the information display apparatus according to the aspect of the present invention further includes a user information database which holds the degree of concentration in association with effective visual field area information indicating a size of the effective visual field area, wherein the user state detecting unit detects, as the user state, a position of a gazing point of the user, the gazing point being found on a plane including the screen, and the application control unit (i) obtains the effective visual field area information associated with the degree of concentration estimated by the degree-of-concentration estimating unit with reference to the user information database, and (ii) determines the initial display position outside the effective visual field area which is estimated with a use of the obtained effective visual field area information and the gazing point detected by the user state detecting unit.

According to this structure, the effective visual field area information associated with the degree of concentration is obtained with reference to the user information database. Hence the information display apparatus easily determines the initial display position of the notification information so that the initial display position is located outside the effective visual field area.

Preferably, the application control unit further (i) determines whether or not distance between the display position of the notification information and a position of the gazing point of the user is smaller than a threshold value while the rendering unit is changing the display position of the notification information, and, when it is determined that the distance is smaller than the threshold value, (ii) updates the effective visual field area information held in the user information database, using the display position.

This structure allows an improvement in the accuracy of the effective visual field area information stored in the user information database.

Preferably, the information display apparatus according to the aspect of the present invention further includes a user identifying unit which identifies the user in front of the screen, wherein the user information database holds, for each of users, the degree of concentration in association with the effective visual field area information indicating the size of the effective visual field area, and the application control unit which obtains the effective visual field area information associated with the user identified by the user identifying unit.

This structure allows the initial display position to be determined with high accuracy, so that the initial display position is located outside the effective visual field area.

Moreover, an information display method according to another aspect of the present invention is for displaying, on a screen, notification information to be notified to users. An information display method according to claim 14 is provided.

These operations can provide the effects similar to those of the above information displaying apparatus.

It is noted that the present invention can be implemented as a program to cause a computer to execute such a method of displaying information. As a matter of course, such a program can be distributed via a computer-readable storage medium including a Compact Disc Read Only Memory (CD-ROM), and a transmission medium including the Internet

[Advantageous Effects of Invention]

As clearly stated in the above description, the information display apparatus according to an aspect of the present invention can determine an initial display position of notification information so that the initial display position is located outside the effective visual field area. Thus the information display apparatus successfully reduces an odd impression the user may receive when the notification information is initially displayed. Furthermore, changing the display position or the display state of displayed notification information, the information display apparatus can casually remind the user of the notification information. Hence the information display apparatus successfully presents the notification information without giving an odd impression to the user.

[Brief Description of Drawings]

[Fig. 1] FIG. 1 shows an overall view of an information display apparatus according to Embodiment 1 of the present invention.
[Fig. 2] FIG. 2 is a block diagram showing a functional structure of the information display apparatus according to Embodiment 1 of the present invention.
[Fig. 3] FIG. 3 is a flowchart showing operations of the information display apparatus according to Embodiment 1 of the present invention.
[Fig. 4] FIG. 4 shows the operations of the information display apparatus according to Embodiment 1 of the present invention.
[Fig. 5] FIG. 5 is a block diagram showing a functional structure of an information display apparatus according to Embodiment 2 of the present invention.
[Fig. 6] FIG. 6 exemplifies a user information database according to Embodiment 2 of the present invention.
[Fig. 7] FIG. 7 is a flowchart showing operations of the information display apparatus according to Embodiment 2 of the present invention.
[Fig. 8] FIG. 8 exemplifies an overall view of an information display apparatus according to Embodiment 3 of the present invention, and an interface thereof to the related equipment.
[Fig. 9] FIG. 9 is a block diagram showing a functional structure of the information display apparatus according to Embodiment 3 of the present invention.
[Fig. 10A] FIG. 10A shows how a user state detecting unit according to Embodiment 3 of the present invention calculates a user position.
[Fig. 10B] FIG. 10B shows how the user state detecting unit according to Embodiment 3 of the present invention calculates the user position.
[Fig. 11] FIG. 11 is a flowchart showing a flow of a process in detecting an eye-gaze direction according to Embodiment 3 of the present invention.
[Fig. 12] FIG. 12 shows how to detect an orientation of the user's face in according to Embodiment 3 of the present invention.
[Fig. 13] FIG. 13 shows an eye-gaze reference plane.
[Fig. 14] FIG. 14 shows how the center of a black part of an eye is detected.
[Fig. 15] FIG. 15 shows how the center of a black part of an eye is detected.
[Fig. 16A] FIG. 16A exemplifies a user information database according to Embodiment 3 of the present invention.
[Fig. 16B] FIG. 16B exemplifies a user information database according to Embodiment 3 of the present invention.
[Fig. 16C] FIG. 16C exemplifies a user information database according to Embodiment 3 of the present invention.
[Fig. 17A] FIG. 17A exemplifies notification information according to Embodiment 3 of the present invention.
[Fig. 17B] FIG. 17B exemplifies notification information according to Embodiment 3 of the present invention.
[Fig. 17C] FIG. 17C exemplifies notification information according to Embodiment 3 of the present invention.
[Fig. 18A] FIG. 18A shows how an information display apparatus according to Embodiment 3 of the present invention is used.
[Fig. 18B] FIG. 18B shows how the information display apparatus according to Embodiment 3 of the present invention operates.
[Fig. 19] FIG. 19 is a flowchart showing a flow of a process executed on the information display apparatus according to Embodiment 3 of the present invention.
[Fig. 20] FIG. 20 exemplifies operations of the information display apparatus according to Embodiment 3 of the present invention.
[Fig. 21] FIG. 21 exemplifies operations of the information display apparatus according to Embodiment 3 of the present invention.

[Fig. 22A] FIG. 22A is a block diagram showing a functional structure of the information display apparatus according to Modification 1 in Embodiment 3 of the present invention.

[Fig. 22B] FIG. 22B is a flowchart showing a flow of a process executed on the information display apparatus according to Modification 1 in Embodiment 3 of the present invention.

[Fig. 23A] FIG. 23A exemplifies operations of the information display apparatus according to Modification 1 in Embodiment 3 of the present invention.

[Fig.23B] FIG. 23B exemplifies operations of the information display apparatus according to Modification 1 in Embodiment 3 of the present invention.

[Fig. 24A] FIG. 24A schematically shows how to control a display area based on a user position according to Modification 2 in Embodiment 3 of the present invention.

[Fig. 24B] FIG. 24B schematically shows how to control the display area based on a user position according to Modification 2 in Embodiment 3 of the present invention.

[Fig. 24C] FIG. 24C schematically shows how to control the display area based on a user position according to Modification 2 in Embodiment 3 of the present invention.

[Fig. 25] FIG. 25 exemplifies operations of the information display apparatus according to Modification 2 in Embodiment 3 of the present invention.

[Fig. 26A] FIG. 26A exemplifies operations of the information display apparatus according to Modification 3 in Embodiment 3 of the present invention.

[Fig. 26B] FIG. 26B exemplifies operations of the information display apparatus according to Modification 3 in Embodiment 3 of the present invention.

[Fig. 27A] FIG. 27A exemplifies operations of the information display apparatus according to Modification 4 in Embodiment 3 of the present invention.

[Fig.27B] FIG. 27B exemplifies operations of the information display apparatus according to Modification 4 in Embodiment 3 of the present invention.

[Fig. 27C] FIG. 27C exemplifies operations of the information display apparatus according to Modification 4 in Embodiment 3 of the present invention.

[Fig. 28A] FIG. 28A exemplifies operations of the information display apparatus according to Modification 5 in Embodiment 3 of the present invention.

[Fig. 28B] FIG. 28B exemplifies operations of the information display apparatus according to Modification 5 in Embodiment 3 of the present invention.

[Fig. 29A] FIG. 29A exemplifies operations of the information display apparatus according to Modification 6 in Embodiment 3 of the present invention.

[Fig. 29B] FIG. 29B exemplifies operations of the information display apparatus according to Modification 6 in Embodiment 3 of the present invention.

[Fig. 30A] FIG. 30A exemplifies operations of the information display apparatus according to Modification 6 in Embodiment 3 of the present invention.

[Fig. 30B] FIG. 30B exemplifies operations of the information display apparatus according to Modification 6 in Embodiment 3 of the present invention.

[Fig. 31A] FIG. 31A exemplifies operations of the information display apparatus according to Modification 7 in Embodiment 3 of the present invention.

[Fig. 31B] FIG. 31B exemplifies operations of the information display apparatus according to Modification 7 in Embodiment 3 of the present invention.

[Fig.31C] FIG. 31C exemplifies operations of the information display apparatus according to Modification 7 in Embodiment 3 of the present invention.

[Fig. 32] FIG. 32 exemplifies operations of the information display apparatus according to Modification 8 in Embodiment 3 of the present invention.

[Description of Embodiments]

Described hereinafter are Embodiments of the present invention with reference to the drawings.

[Embodiment 1]

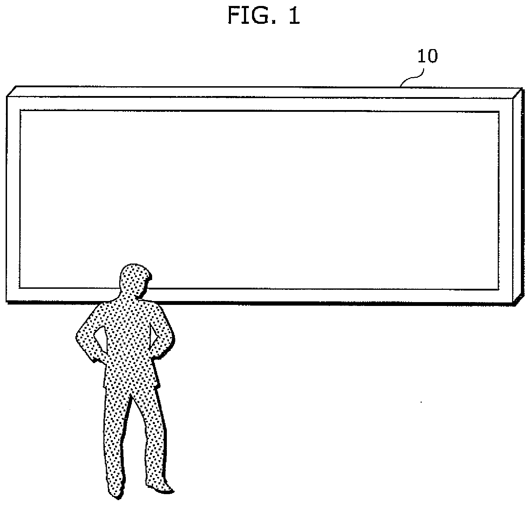

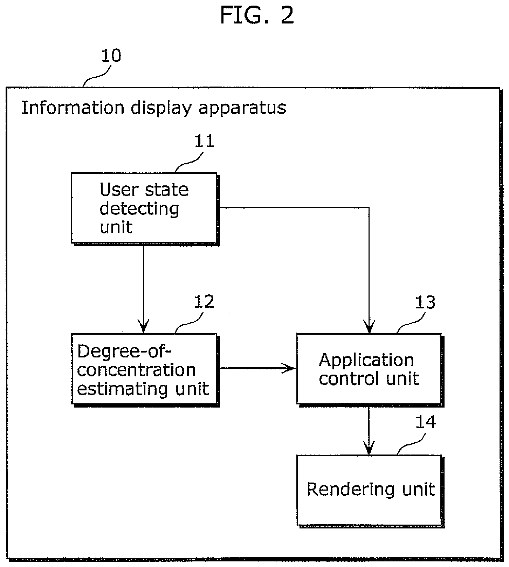

FIG. 1 shows an overall view of an information display apparatus according to Embodiment 1 of the present invention. FIG. 2 is a block diagram showing a functional structure of the information display apparatus according to Embodiment 1 of the present invention.

Displaying notification information on a screen, an information display apparatus 10 according to Embodiment 1 is characterized by initially displaying the notification information outside the effective visual field area of a user. As shown in FIG. 1, the information display apparatus 10 is suitable for use in a large-screen display.

As shown in FIG. 2, the information display apparatus 10 includes a user state detecting unit 11, a degree-of-concentration estimating unit 12, an application control unit 13, and a rendering unit 14.

The user state detecting unit 11 detects a user state; that is, a physical state of the user. Specifically, for example, the user state detecting unit 11 detects, as the user state, a position of a gazing point of the user on a plane including the screen, and holds the detected user state. Embodiment 3 details how to detect the position of the gazing point of the user.

It is noted that the user state detecting unit 11 may detect an orientation of the user's face or a posture of the user as the user state. Here the user state detecting unit 11 uses an image of the user's face obtained by a camera to detect the orientation of the user's face, for example. The user state detecting unit 11 also uses a pressure sensor provided on the floor in front of the screen or an image of the user's face obtained by the camera to detect the posture of the user.

Based on the detected user state, the degree-of-concentration estimating unit 12 estimates a degree of concentration. The degree of concentration indicates a degree in which the user concentrates on the screen.

Specifically, the degree-of-concentration estimating unit 12 estimates the degree of concentration based on the distribution of gazing points. Here the distribution of gazing points is detected within a predetermined time period by the user state detecting unit 11. For example, the degree-of-concentration estimating unit 12 estimates that a wider distribution of the gazing points shows a smaller degree of concentration. The predetermined time period is, for example, from the nearest time at which the gazing points are detected to a tracked back time for a certain time period.

Furthermore, the degree-of-concentration estimating unit 12 may estimate the degree of concentration based on the moving distance of the gazing points detected by the user state detecting unit 11. Here the degree-of-concentration estimating unit 12, for example, calculates the moving distance of the gazing points from the positions of the gazing points detected within a predetermined time period by the user state detecting unit 11. The degree-of-concentration estimating unit 12 estimates that a greater moving distance of the gazing points shows a smaller degree of concentration.

Moreover, the degree-of-concentration estimating unit 12 may estimate the degree of concentration based on the distribution of orientations of the user's face. The distribution represents the orientations of the user's face detected within a predetermined time period by the user state detecting unit 11. Here, for example, the degree-of-concentration estimating unit 12 estimates that a wider distribution of values indicating the orientations of the face shows a smaller degree of concentration. The orientations of the face are detected within a predetermined time period by the user state detecting unit 11.

Furthermore, the degree-of-concentration estimating unit 12 may estimate the degree of concentration based on the posture of the user detected by the user state detecting unit 11. Here, the degree-of-concentration estimating unit 12 refers to a database to estimate a degree of concentration corresponding to the detected posture of the user. The database stores degrees of concentration corresponding to the user's postures (for example, a standing position, a seated position, or a recumbent position).

The application control unit 13 determines an initial display position of notification information based on the estimated degree of concentration such that the initial display position is located outside an effective visual field area which is visible by the user. Specifically, the application control unit 13 determines the initial display position, such that the initial display position is located farther from a position determined by a position of the detected gazing point as the estimated degree of concentration is smaller. It is noted that the application control unit 13 may determine the initial display position such that, as the estimated degree of concentration is smaller, the initial display position is for example located farther from (i) the central position of the display area of content displayed on the screen or (ii) the central position of the screen.

Here the effective visual field area is an area in which the user can recognize a displayed image relatively clearly. The area changes its size depending on the degree of concentration of the user. For example, the effective visual field area is formed in a circle or an oval whose center is the center position of the distribution of the gazing points. The effective visual field area becomes greater as the degree of concentration of the user becomes smaller. When the notification information suddenly appears within the effective visual field area, the user receives an odd impression and feels annoyed.

The position determined by the position of the gazing point includes the following for example; (i) the position of the gazing point itself, or (ii) the centroidal position or the center position of the distribution of gazing points detected within a predetermined time period.

Furthermore, the notification information presents the user notification. Specifically, the notification information includes, for example, (i) text information or image information which show a state of an appliance connected to the information display apparatus 10 via the network, or (ii) text information or image information which relate to displayed content. More specifically, the notification information includes, for example, an icon of a microwave indicating that the microwave has finished heating.

The rendering unit 14 displays the notification information on a screen such as, for example, a plasma display panel (PDP) and a liquid crystal panel.

Specifically, the rendering unit 14 first displays the notification information at the determined initial display position. Then the rendering unit 14 changes at least one of the display position and the display state of the displayed notification information.

More specifically, the rendering unit 14 for example moves the image showing the notification information to a target position to change the display position of the notification information. Here, for example, the target position represents gazing points detected within a predetermined time period. A typical target position is the center position of the distribution of the gazing points. Moreover, the target position is found on displayed content within a display area. A typical target position may be the center position of the display area of the displayed content. Furthermore, the target position may be found (i) outside the display area of the displayed content and (ii) near the boarder of the display area of the displayed content.

In addition, for example, the rendering unit 14 changes the display state of the notification information by changing (i) sharpness or colors of an image showing the notification information or (ii) a size of the display area for the notification information. Specifically, the rendering unit 14 gradually enlarges the display area for the notification information. Moreover, the rendering unit 14 may gradually increase the sharpness of the image showing the notification information. In addition, the rendering unit 14 may gradually change the colors of the image showing the notification information to a color having greater chromaticness.

It is noted that the rendering unit 14 may change the notification information in both of display position and display state.

Described next are various operations of the information display apparatus 10 structured above.

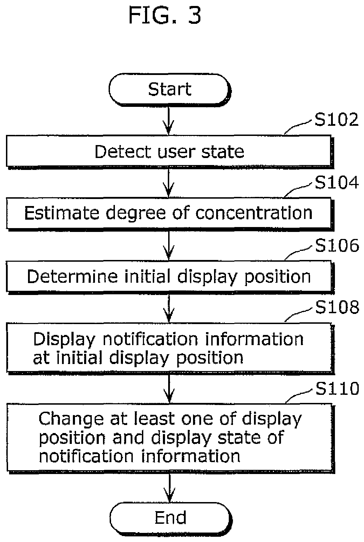

FIG. 3 is a flowchart showing operations of the information display apparatus according to Embodiment 1 of the present invention.

First, the user state detecting unit 11 detects a user state; that is, a physical state of the user (S102). Based on the detected user state, the degree-of-concentration estimating unit 12 estimates a degree of concentration (S104). The degree of concentration indicates a degree in which the user concentrates on the screen.

Then, based on the estimated degree of concentration, the application control unit 13 determines an initial display position of notification information so that the initial display position is located outside the effective visual field area (S106).

Furthermore, the rendering unit 14 displays the notification information at the determined initial display position (S108). Then the rendering unit 14 changes at least one of the display position and the display state of the displayed notification information (S110), and the process ends.

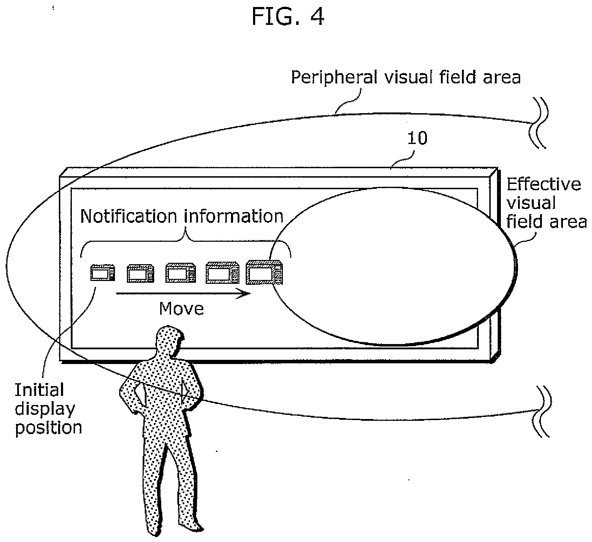

FIG. 4 shows the operations of the information display apparatus according to Embodiment 1 of the present invention. Specifically, FIG. 4 shows a temporal change of the notification information displayed on the screen.

A peripheral visual field area covers a central visual field area of the user. The central visual field area is an area in which the user can recognize an object with a high resolution. In the central visual field area, the user can recognize the movement or the change of the object. A typical outer edge of the peripheral visual field area fits in the user's visual angle of from approximately 180 degrees to 210 degrees.

Included in the peripheral visual field, the effective visual field area allows the user to recognize the object relatively clearly. The size of the effective visual field area changes depending on a psychological factor of the user. As the user's degree of concentration is greater, the size is smaller. A typical outer edge of the effective visual field area fits in the user's visual angle from approximately four degrees to 20 degrees.

Thus when the screen is large or when the user positions close to the screen, the screen area stretches outside the effective visual field area as shown in FIG. 4. The information display apparatus 10 first determines the initial display position based on the degree of concentration such that the initial display position is located in the screen area (i) within the peripheral visual field area, and (ii) outside the effective visual field area. Then the information display apparatus 10 displays the notification information at the determined initial display position. This approach allows the information display apparatus 10 to reduce an odd impression the user may receive when the notification information is displayed.

Then the information display apparatus 10 changes at least one of the display position and the display state of the notification information displayed in the screen area (i) within the peripheral visual field area, and (ii) outside the effective visual field area. As shown in FIG. 4, for example, the information display apparatus 10 (i) moves the notification information displayed outside the effective visual field area toward the center position (the central visual field area) of the effective visual field area, and (ii) gradually enlarges the image which the notification information shows. This approach allows the information display apparatus 10 to casually make the user aware of the notification information.

As described above, the information display apparatus 10 according to Embodiment 1 can determine an initial display position of notification information so that the initial display position is located outside the effective visual field area. Hence the information display apparatus 10 can reduce an odd impression the user may receive when the notification information is initially displayed. Furthermore, changing the display position or the display state of displayed notification information, the information display apparatus 10 can casually remind the user of the notification information. Hence the information display apparatus 10 successfully presents the notification information without giving an odd impression to the user.

Moreover, the information display apparatus 10 can determine the initial display position, so that the initial display position is located farther from a position determined by positions of the detected gazing points as the user's degree of concentration is smaller. Accordingly, the initial display position can be easily determined to be located outside the effective visual field area.

In addition, the information display apparatus 10 can estimate the user's degree of concentration with high accuracy based on the following user states; the distribution of gazing points, the moving distance of the gazing points, the orientation of the user's face, or the posture of the user.

(Embodiment 2)

Embodiment 2 of the present invention is described hereinafter with reference to the drawings. Embodiment 2 focuses on the points different from those in Embodiment 1. An information display apparatus 20 according to Embodiment 2 is different from information display apparatus 10 according to Embodiment 1 in that the information display apparatus 20 refers to a user information database 23 to determine an initial display position.

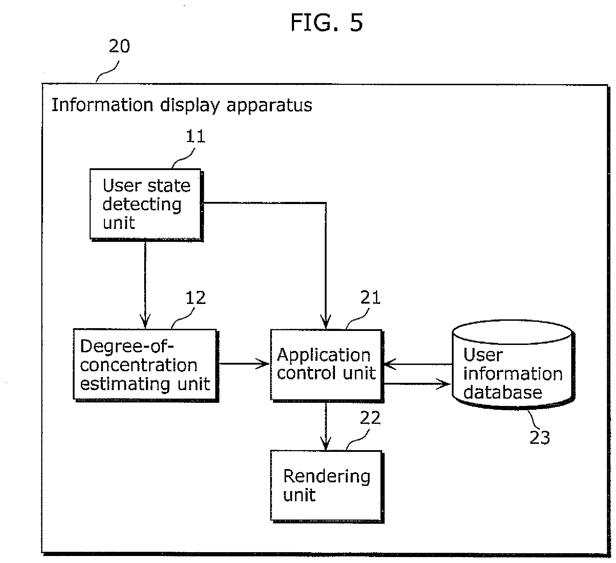

FIG. 5 is a block diagram showing a functional structure of the information display apparatus 20 according to Embodiment 2 of the present invention. The same constituent features in FIGS. 2 and 5 share the same numerical references, and thus the descriptions thereof shall be omitted.

An application control unit 21 determines an initial display position of notification information based on an estimated degree of concentration, so that the initial display position is located outside an effective visual field area which is visible by a user.

Specifically, the application control unit 21 refers to the user information database 23 to obtain effective visual field area information corresponding to the estimated degree of concentration. Then the application control unit 21 determines the initial display position outside the effective visual field area to be estimated based on the obtained effective visual field area information and detected gazing points.

More specifically, when the effective visual field area information indicates the distance from the center position of the distribution of the gazing points, for example, the application control unit 21 determines, as the initial display position, a position which is a given length of distance away from the center position of the distribution of the gazing points. Here the given length of distance is the sum of the distance indicated in the effective visual field area information and a certain distance. Furthermore, when the effective visual field area information indicates the user's visual angle, for example, the application control unit 21 determines the initial display position, so that an angle formed between two lines is greater than the visual angle. Here one of the two lines connects a position of the user with the center position of the distribution of the gazing points, and the other line connects the position of the user with the initial display position.

While a rendering unit 22 is changing the display position of the notification information, the application control unit 21 further determines whether or not the distance between the display position of the notification information and the position of the user's gazing point is smaller than a threshold value. Here the threshold value is the upper limit of the distance in which the user would pay attention to the notification information. Such a value is predetermined based on experiences and experiments.

When determining that the distance is smaller than the threshold value, the application control unit 21 updates the effective visual field area information stored in the user information database 23, using the display position.

Specifically, when the effective visual field area information indicates the distance from the center position of the distribution of the gazing points, for example, the application control unit 21 calculates the distance between the display position of the notification information and the center position of the distribution of the gazing points in the case where the application control unit 21 determines that the distance between the display position of the notification information and the position of the user's gazing point is smaller than the threshold value. Then the application control unit 21 updates the distance indicated in the effective visual field area information to the calculated distance.

When the effective visual field area information indicates the visual angle, for example, the application control unit 21 calculates an angle formed between two lines. One of the lines connects the display position of the notification information with the user's eye location, and the other line connects the center position of the distribution of the gazing points with the user's eye location. Then the application control unit 21 updates the visual angle indicated in the effective visual field area information to the calculated angle.

The rendering unit 22 displays the notification information at the determined initial display position. Then the rendering unit 22 changes the display position of the displayed notification information.

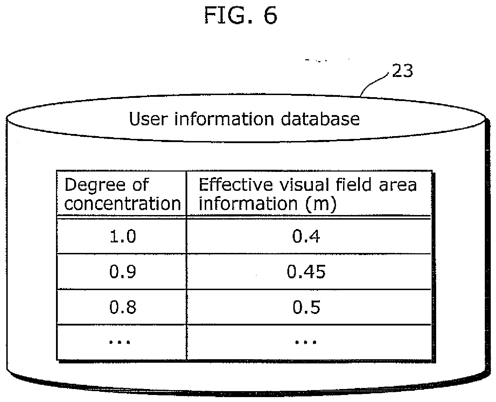

As shown in FIG. 6, the user information database 23 associates, to hold, degrees of concentration with pieces of the effective visual field area information.

FIG. 6 exemplifies the user information database according to Embodiment 2 of the present invention.

The effective visual field area information shows the size of the effective visual field area. In FIG. 6, the effective visual field area information indicates the distance from the center position of the distribution of the gazing points. When the degree of concentration is "0.8", for example, the user information database 23 in FIG. 6 shows that a point which is "0.5" meter away from the center position of the distribution of the gazing points is positioned outside the effective visual field area.

Described next are various operations of the information display apparatus 20 structured above.

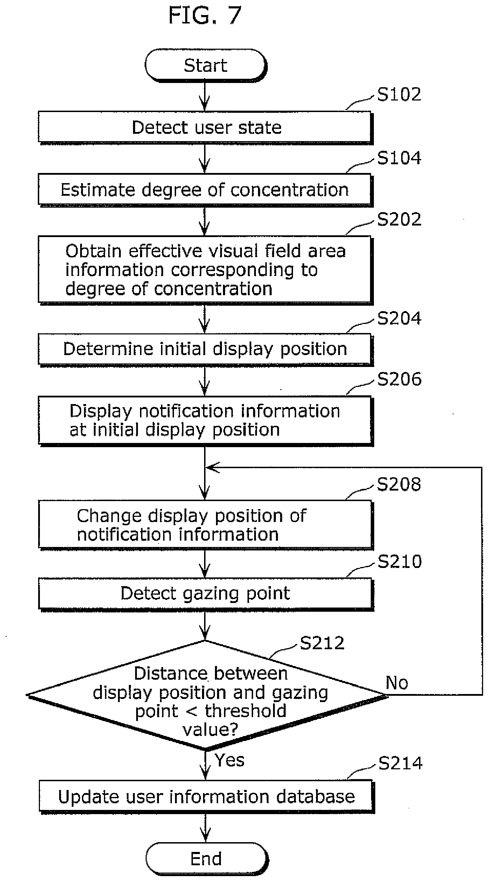

FIG. 7 is a flowchart showing operations of the information display apparatus 20 according to Embodiment 2 of the present invention. The same constituent features in FIGS. 3 and 7 share the same numerical references, and thus the descriptions thereof shall be omitted.

The application control unit 21 refers to the user information database 23 to obtain the effective visual field area information corresponding to the estimated degree of concentration (S202). Next, the application control unit 21 estimates the effective visual field area using the center position of the distribution of the gazing points and the obtained effective visual field area information, and determines the initial display position outside the estimated effective visual field area (S204).

Furthermore, the rendering unit 22 displays the notification information at the determined initial display position (S206). Then the rendering unit 22 changes the display position of the displayed notification information (S208). Next, the user state detecting unit 11 detects a gazing point of the user (S210).

Then the application control unit 21 determines whether or not the distance between the display position of the current notification information and the gazing point detected in Step S209 is equal to or smaller than a threshold value (S212). When the distance between the display position and the gazing point is equal to or smaller than the threshold value (S212: Yes), the application control unit 21 uses the current display position to update the effective visual field area information stored in the user information database 23 (S214), and finishes the process. When the distance between the display position and the gazing point is greater than the threshold value (S212: No), the process goes back to Step S208.

As described above, the information display apparatus 20 according to Embodiment 2 refers to the user information database 23 to obtain effective visual field area information corresponding to a degree of concentration. Accordingly, the information display apparatus 20 can easily determine an initial display position so that the initial display position is located outside an effective visual field area.

When the distance between a display position of notification information and a gazing point of the user is smaller than a threshold value, the information display apparatus 20 uses the display position to update the effective visual field area information. This approach allows an improvement in the accuracy of the effective visual field area information stored in the user information database 23.

It is noted that the application control unit 21 according to Embodiment 2 updates the user information database 23; meanwhile, the application control unit 21 does not necessarily have to update the user information database 23. In the case where the application control unit 21 does not update the user information database 23, the information display apparatus 20 can determine the initial display position with reference to the user information database 23, so that the initial display position is located outside the effective visual field area.

Furthermore, in Embodiment 2, the application control unit 21 determines whether or not the distance between the display position of the notification information and the gazing point of the user is smaller than the threshold value; meanwhile, the application control unit 21 may determine whether or not the distance between the display position of the notification information and the gazing point of the user has been smaller than the threshold value for a predetermined time period. This approach can reduce the decrease in the determination accuracy due to misdetection of the gazing point.

(Embodiment 3)

Useful as a large screen display to be watched by one or more users, an information display apparatus 30 according to Embodiment 3 controls the presentation of notification information based on a watching state of the user to displayed content.

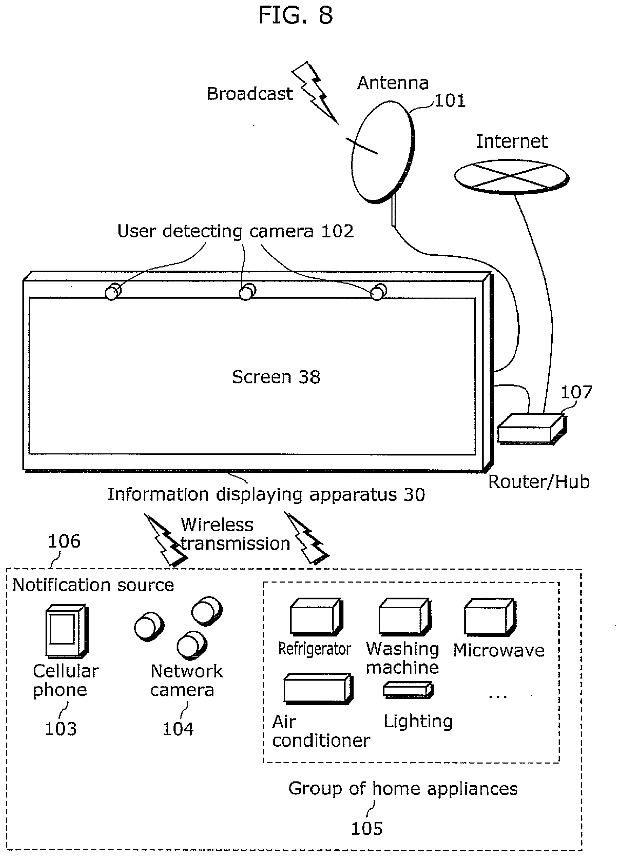

FIG. 8 exemplifies an overall view of the information display apparatus 30 according to Embodiment 3 of the present invention, and an interface thereof to the related equipment. The information display apparatus 30 obtains content and image information from an antenna 101 used for receiving a broadcast program and from at least one user detecting camera 102. The user detecting cameras 102 may be placed on the wall on which the screen is provided or on the ceiling, instead of being provided on the information display apparatus 30 as shown in FIG. 8. The user detecting cameras 102 may be provided on both of the information display apparatus 30, and the wall and the ceiling.

Moreover, the information display apparatus 30 is connected, via a wireless network or a wired network, to a notification source 106, such as a cellular phone 103, a network camera 104, and a group of home appliances 105 (including a refrigerator, a washing machine, a microwave, an air conditioner, and a light). Furthermore, the information display apparatus 30 is connected to the Internet via a router/hub 107.

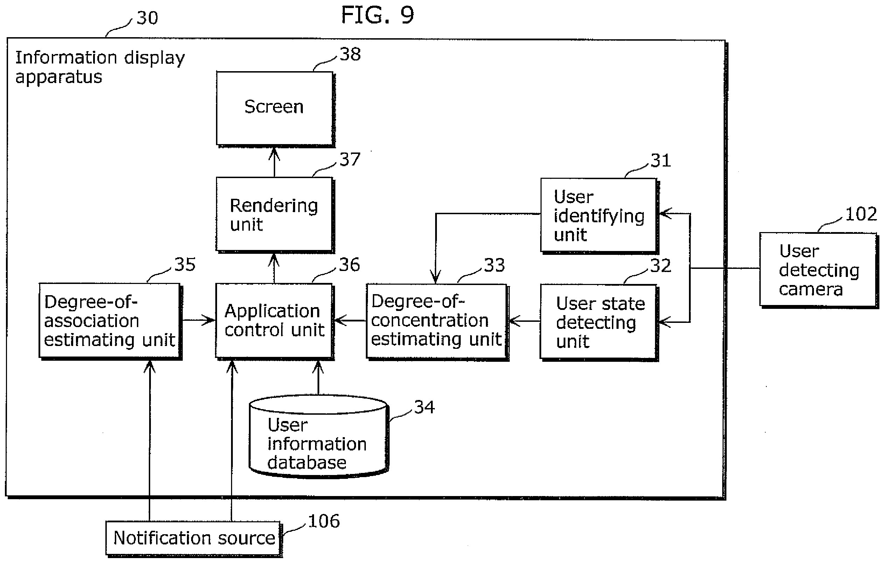

FIG. 9 is a block diagram showing a functional structure of the information display apparatus 30 according to Embodiment 3 of the present invention.

As shown in FIG. 9, the information display apparatus 30 includes a user identifying unit 31, a user state detecting unit 32, a degree-of-concentration estimating unit 33, a user information database 34, a degree-of-association estimating unit 35, an application control unit 36, a rendering unit 37, and a screen 38.

Described hereinafter is each constituent feature in FIG. 9 with reference to other drawings.

Provided around the screen 38, each of the user detecting cameras 102 includes an image sensor such as a charge coupled device (CCD) or a complementary metal oxide semiconductor (CMOS).

The user detecting camera 102 captures an image of the user found in front of the screen 38.

Once extracting a face region from the image captured by the user detecting camera 102, the user identifying unit 31 specifies the user by matching a previously registered face image to the extracted face image. Then the user identifying unit 31 provides user identification information used for identifying the specified user.

The user state detecting unit 32 detects a position of the gazing point of the user found on the screen 38. The user state detecting unit 32 detects a user position and an eye-gaze direction of the user. Based on the detection result, the user state detecting unit 32 detects the position of the gazing point. Described hereinafter in order are how to detect the user position, the eye-gaze direction, and the position of the gazing point.

Described first is how to detect the user position.

The user state detecting unit 32 extracts an area, in which the user is captured (hereinafter referred to as a "user area"), for each of images captured by the user detecting camera 102. Then the user state detecting unit 32 takes advantage of a parallax difference developed of stereo disparity to calculate a relative position (hereinafter referred to as a "user position") found between the user and the screen 38 based on a corresponding relationship between user areas in the images.

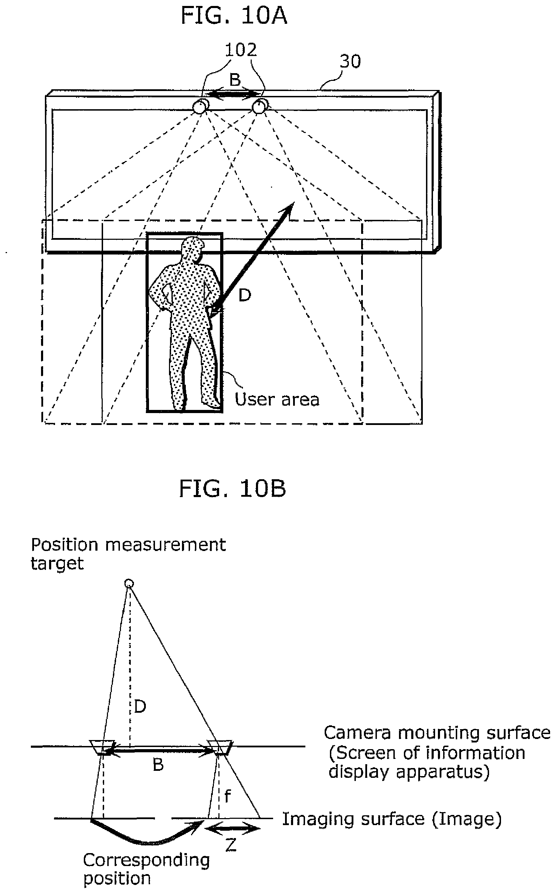

FIGS. 10A and 10B show how the user state detecting unit 32 according to Embodiment 3 of the present invention calculates the user position.

As shown in FIG. 10A, the user detecting cameras 102 are provided in pairs and placed apart each other in distance "B" and in parallel to the screen 38. The user state detecting unit 32 extracts the user area found within the image captured by each of the user detecting camera 102. Then the user state detecting unit 32 calculates distance "D" found between the user and the screen 38 based on a position mismatch between the user areas found on the corresponding images.

Specifically, for example, the user state detecting unit 32 has previously held an image having no user and captured by each of the user detecting camera 102. When the user appears in a capturing range (a user detectable area), the user state detecting unit 32 calculates the difference between the captured images and the stored images to extract the user area. Moreover, the user state detecting unit 32 can also extract as the user area the user's face region obtained through detection and matching of a face image.

FIG. 10B shows a principle of range finding employing stereo disparity in order to obtain the distance "D" found between the user and a camera mounting surface (the screen 38) based on a positional relationship between the user areas found on corresponding two images. As shown in FIG. 10B, the images of the user; namely a position measurement target, are projected on imaging surfaces for associated image sensors of the two user detecting cameras 102. Assume that "Z" is the image-wise mismatch observed between the projected images of the position measurement target. The user state detecting unit 32 employs focal point distance of the cameras "f" and the distance between the optical axes "B" to calculate the distance "D" found between the user and the screen 38 as shown in Expression (1).

[Expression 1]

$$D = f \frac{B}{Z} \qquad \cdots (1)$$

The user state detecting unit 32 can also calculate a user position in a direction going parallel with the screen 38 based on (i) the position of the user area found in the images and (ii) the distance "D" calculated with Expression (1). As described above, the user state detecting unit 32 detects to provide a relative position of the user with respect to the screen 38.

It is noted that the user state detecting unit 32 does not necessarily employ the stereo disparity for calculating the user position. For example, the user state detecting unit 32 may employ distance information obtained according to the principle of Time of Flight in order to detect the user position. Here, provided may be at least one user detecting camera 102 equipped with a distance image sensor. The distance image sensor employs the principle of Time of Flight to provide distance information.

The user state detecting unit 32 may detect the user position based on a pressure value obtained by a floor pressure sensor provided on a floor in front of the screen 38. Here, no user detecting cameras 102 are required for detecting the user position.

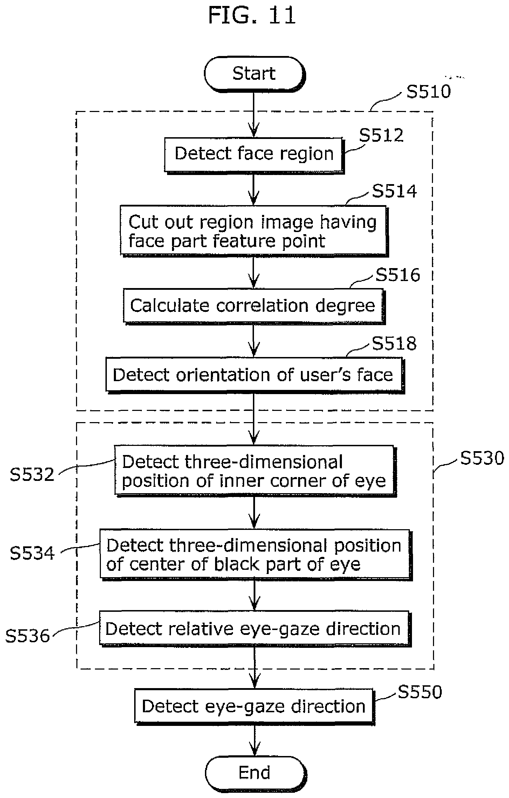

Next, how to detect the eye-gaze direction is described with reference to FIGS. 11 to 15.

Described hereinafter is how the user state detecting unit 32 detects the eye-gaze direction of the user.

FIG. 11 is a flowchart showing a flow of a process in detecting an eye-gaze direction according to Embodiment 3 of the present invention.

As shown in FIG. 11, the user state detecting unit 32 detects the eye-gaze direction (S550) based on the results of (i) the detection of an orientation of the user's face (S510) and (ii) the detection of an relative eye-gaze direction with respect to the orientation (S530).

Described first is how to detect the orientation of the user's face (S510).

To begin with, the user state detecting unit 32 detects a face region from images of a user found in front of the screen 38 (S512). Here, the images have been captured by the user detecting cameras 102. Next, the user state detecting unit 32 applies a region having a face part feature point to the detected face region, and cuts out a region image having each of face part feature points (S514). Here, the face part feature point corresponds to each reference face orientation.

Then the user state detecting unit 32 calculates a correlation degree between the cut out region image and a pre-stored template image (S516). Based on the calculated correlation degree, the user state detecting unit 32 calculates a weighted sum by weighting and adding angles of the corresponding reference face orientations. Finally, the user state detecting unit 32 detects the weighted sum as the orientation of the user's face corresponding to the detected face region (S518).

As described above, the user state detecting unit 32 carries out Steps S512 through S518 to detect the orientation of the user's face.

Described next is how to detect the relative eye-gaze direction (S530).

First, the user state detecting unit 32 detects three-dimensional positions of inner corners of the user's both eyes, using the images captured by the user detecting cameras 102 (S532). Then, the user state detecting unit 32 detects three-dimensional positions of the centers of the black parts of the user's both eyes using the images captured by the user detecting cameras 102 (S534). The user state detecting unit 32 then detects the relative eye-gaze direction, using an (i) eye-gaze reference plane calculated from the three-dimensional positions of the inner corners of the both eyes and (ii) the three-dimensional positions of the centers of the black parts of the user's both eyes (S536).

As described above, the user state detecting unit 32 carries out Steps S532 through S536 to detect a relative eye-gaze direction.

Then the user state detecting unit 32 uses the orientation of the orientation of the user's face and the relative eye-gaze direction both detected above to detect the eye-gaze direction of the user.

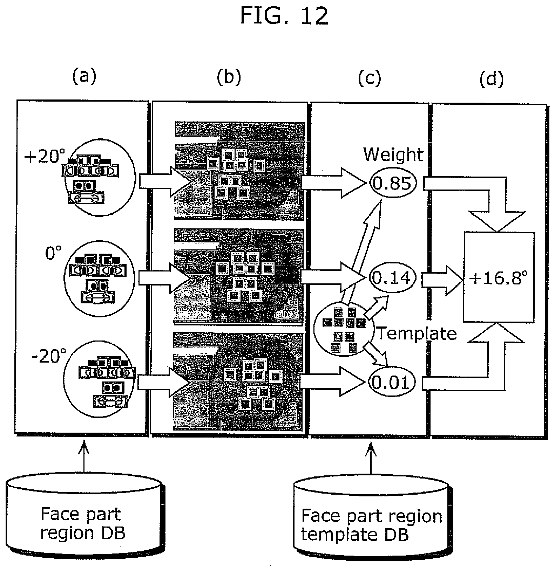

Described next in details is how to detect the eye-gaze direction with reference to FIGS. 12 to 15.

FIG. 12 shows how to detect the orientation of the user's face in according to Embodiment 3 of the present invention.

First, as (a) in FIG. 12 shows, the user state detecting unit 32 reads a region having a face part feature point from a face part region database (DB). The face part region DB stores a region of a face part feature point corresponding to an associated reference face orientation. Then, as (b) in FIG. 12 shows, the user state detecting unit 32 (i) applies the region having the face part feature point to a face region of a captured image for each reference face orientation, and (ii) cuts out a region image having the face part feature point for each reference face orientation.

Furthermore, as (c) in FIG. 12 shows, the user state detecting unit 32 calculates, for each reference face orientation, a correlation degree between the cut out region image and a template image stored in the face part region template DB. The user state detecting unit 32 also calculates a weight for each reference face orientation depending on magnitude of the calculated correlation degree. For example, the user state detecting unit 32 calculates, as a weight, a ratio of the correlation degree for each reference face orientation to the total sum of the degrees of correlation of the reference face orientations.

Then, as (d) in FIG. 12 shows, the user state detecting unit 32 calculates the total sum of values each of which is obtained by multiplying an angle of the reference face orientation by the calculated weight. Finally, the user state detecting unit 32 detects the calculated result as the orientation of the user. The following exemplifies how to weigh and detect the face orientation in (d) in FIG. 12: an angle of the reference face orientation plus 20 degrees is weighted "0.85"; an angle of the reference face orientation plus zero degree is weighted "0.14"; and an angle of the reference face orientation minus 20 degrees is weighted "0.01". Thus the user state detecting unit 32 detects the face orientation of the user as 16.8 degrees (= 20 x 0.85 + 0 x 0.14 + (-20) x 0.01).

It is noted that, in Embodiment 3, the user state detecting unit 32 employs a region image having a face part feature point to calculate a correlation degree; meanwhile, the user state detecting unit 32 does not necessarily employ a region image having a face part feature point. For example, the user state detecting unit 32 may calculate a correlation degree employing an image having the entire face region.

Moreover, another technique to detect a face orientation involves detecting face part feature points including an eye, a nose, and a mouth from a face image, and calculating a face orientation from a positional relationship of the face part feature points. One of techniques to calculate a face orientation out of a positional relationship of face part feature points involves (i) rotating, enlarging, and reducing a prepared three-dimensional model having face part feature points so that the face part feature points most match face part feature points obtained from one of the camera, and (ii) calculating the face orientation out of the obtained rotation amount of the three-dimensional model. Another technique to calculate a face orientation out of a positional relationship of face part feature points involves (i) employing the principle of the stereo disparity based on images captured by two cameras to calculate a three-dimensional position for each face part feature point out of a mismatch found on the images of positions of face part feature points in the right and left cameras, and (ii) calculating the face orientation out of the positional relationship of the obtained face part feature points. Specifically, for example, the technique includes detecting a direction of a normal found on a plane including three-dimensional address points of a mouth and both eyes.

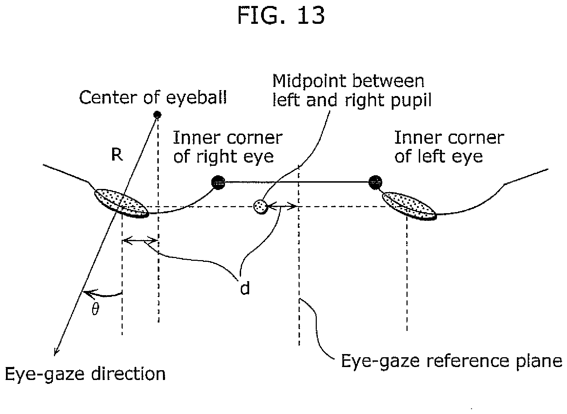

Described next is how to detect the relative eye-gaze direction with reference to FIGS. 13, 14 and 15. In Embodiment 3, the user state detecting unit 32 detects the following: first an eye-gaze reference plane; then three-dimensional positions of the centers of black parts of both of the user's eyes; and finally a relative eye-gaze direction

Described first is how to detect the eye-gaze reference plane.

FIG. 13 shows an eye-gaze reference plane. In Embodiment 3, the user state detecting unit 32 detects three-dimensional positions of the corners (inner corners) of the both eyes to detect the eye-gaze reference plane.

The eye-gaze reference plane, used as a reference in detecting a relative eye-gaze direction, is a bilateral symmetry plane of a face as shown in FIG. 13. The positions of the corners move less than other face parts such as tails of eyes, corners of a mouth, and eyebrows do, and thus cause less misdetection. Thus, in Embodiment 3, the user state detecting unit 32 uses the three-dimensional positions of the corners of the both eyes to detect the eye-gaze reference plane; namely, the bilateral symmetry plane of the face.

Specifically, the user state detecting unit 32 detects corner regions of the both eyes using a face detecting module and a face part detecting module for each of two images simultaneously captured by the two user detecting cameras 102. Then the user state detecting unit 32 detects three-dimensional positions of corners of both of the eyes, taking advantage of a mismatch (disparity) between the images of the detected corner regions. Furthermore, as shown in FIG. 13, the user state detecting unit 32 detects, as the eye-gaze reference plane, the perpendicular bisector dividing a segment whose endpoints start at the three-dimensional positions of the corners of the both eyes.

Described next is how to detect the center of a black part of an eye.

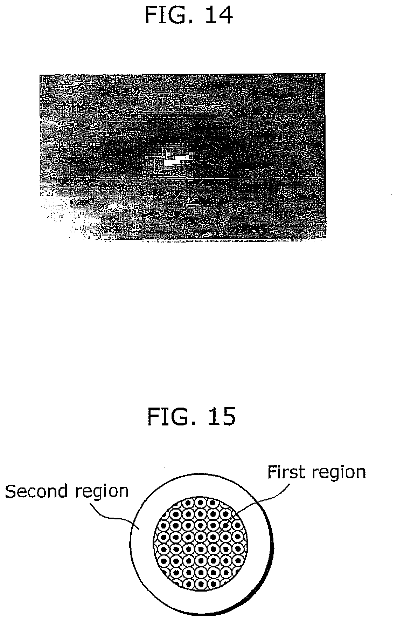

FIGS 14 and 15 show how the center of a black part of an eye is detected.

People visually recognize an object when (i) a light from the object arrives at the retina via the pupil to be converted into an electric signal, and (ii) the electric signal is transmitted to the brain. Thus, the use of a position of the pupil can detect an eye-gaze direction. However, pupils of Japanese people are black or blown. Thus, it is difficult to distinguish a pupil from an iris through an imaging process. Moreover, the center of the pupil approximately matches with the center of a black part of an eye (including both of the pupil and the iris). Hence, in Embodiment 3, the user state detecting unit 32 detects the center of a black part of an eye when detecting a relative eye-gaze direction.

First the user state detecting unit 32 detects positions of a corner and a tail of an eye from a captured image. Then, from an image having a region including the tail and the corner of the eye as shown in FIG. 14, the user state detecting unit 32 detects a region with little luminance as a black-part-of-eye region. Specifically, for example, the user state detecting unit 32 detects, as the black-part-of-eye region, a region (i) whose luminance is equal to a predetermined threshold or smaller and (ii) whose size is greater than a predetermined size.

Next the user state detecting unit 32 sets a black-part-of-eye detecting filter including a first region and a second region, as shown in FIG. 15, to any given position in the black-part-of-eye region. Then the user state detecting unit 32 (i) searches for a position, of the black-part-of-eye detecting filter, at which an inter-regional dispersion between the luminance of a pixel within the first region and the luminance of a pixel within the second region becomes the greatest, and (ii) detects the position indicated in the search result as the center of the black part of the eye. Similar to the above, the user state detecting unit 32 detects a three-dimensional position of the center of a black part of an eye, taking advantage of a mismatch of the centers of black parts of eyes found on simultaneously captured two images.

Described finally is how to detect a relative eye-gaze direction.

The user state detecting unit 32 uses the detected eye-gaze reference plane and three-dimensional positions of the centers of the black parts of both of the eyes to detect the relative eye-gaze direction. Adult eyeballs rarely vary in diameter from person to person. In the case of Japanese people, for example, the diameter is approximately 24 mm. Once positions of the centers of the black parts of the both eyes are found when the user looks into a reference direction (front, for example), the user state detecting unit 32 obtains displacement of the central positions of the black parts from the central positions in the reference direction to current central positions of the black parts of the eyes. Then, the user state detecting unit 32 calculates to convert the obtained displacement into the eye-gaze direction.

A conventional technique requires calibration since the positions of the centers of the black parts of the both eyes are not known when the user looks into a reference direction. The technique in Embodiment 3, concurrently, employs the fact that the midpoint of a segment lying across the centers of the black parts of the both eyes is found in the middle of the face; that is on the eye-gaze reference plane, when the user faces the front. In other words, the user state detecting unit 32 calculates the distance between the midpoint of a segment lying across the centers of the black parts of the both eyes and the eye-gaze reference plane to detect the relative eye-gaze direction.

Specifically, the user state detecting unit 32 uses an eyeball radius "R" and the distance "d" between the midpoint of the segment lying across the centers of the black parts of the both eyes and the eye-gaze reference plane to detect, as the relative eye-gaze direction, a rotational angle θ observed in a horizontal direction with respect to a face orientation.

[Expression 2]

$$\theta = \sin^{-1}\left(\frac{d}{R}\right) \qquad \cdots (2)$$

As described above, the user state detecting unit 32 uses an eye-gaze reference plane and three-dimensional positions of the centers of the black parts of both of the eyes to detect a relative eye-gaze direction. Then, the user state detecting unit 32 uses the orientation of the user's face and the relative eye-gaze direction both detected above to detect the eye-gaze direction of the user.

Described last is how to detect a position of a gazing point.

The user state detecting unit 32 uses the user position and the user's eye-gaze direction both detected above to detect the position of the user's gazing point found on a plane including the screen. Specifically the user state detecting unit 32 detects the position of the user's gazing point by calculating an intersection point of a line extending from the user position in the eye-gaze direction and a plane including the screen.

As described above, the user state detecting unit 32 detects the position of the user's gazing point as the user state. Furthermore, the user state detecting unit 32 may detect, as the user state, the orientation of the user's face detected when detecting the position of the gazing point. In addition, the user state detecting unit 32 may detect a posture of the user as the user state.

Described hereinafter again is each constituent feature in FIG. 9.

The degree-of-concentration estimating unit 33 estimates a degree of concentration for each user, using the user state detected by the user state detecting unit 32. Identified by the user identifying unit 31, each user is watching the displayed content. Specifically, the degree-of-concentration estimating unit 33 may calculate the degree of concentration of the user based on the distribution of the orientations of the user's face for a predetermined time period. Furthermore, the degree-of-concentration estimating unit 33 may calculate the degree of concentration of the user based on the distribution of the user's gazing points for a predetermined time period. Moreover, the degree-of-concentration estimating unit 33 may calculate the user's degree of concentration based on the posture of the user.

The technique to calculate the degree of concentration shall be described later.

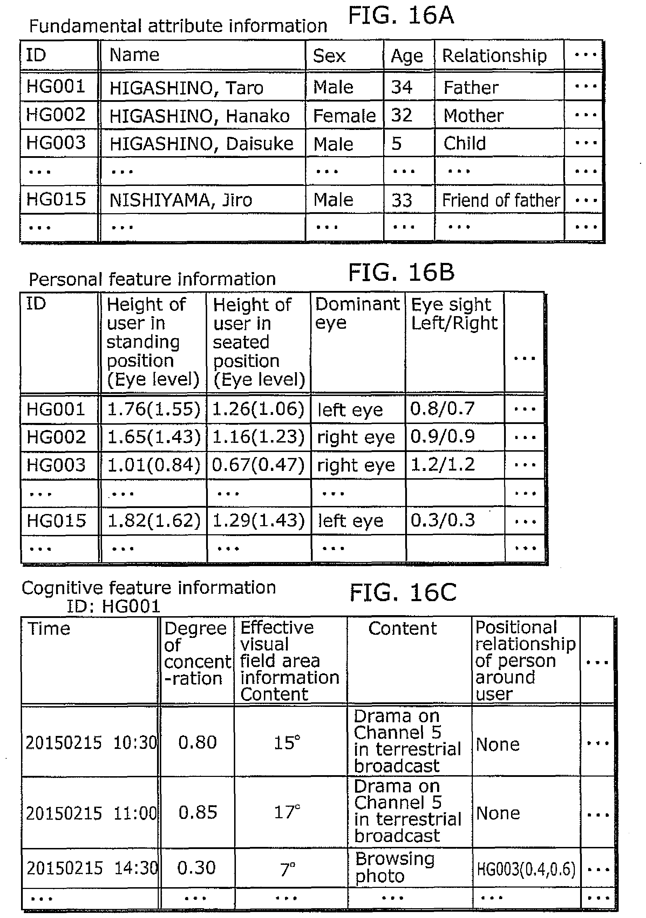

The user information database 34 stores various kinds of information shown in FIGS. 16A to 16C.

FIGS. 16A to 16C exemplify the user information database 34 according to Embodiment 3 of the present invention.

The user information database 34 stores fundamental attribute information shown in FIG. 16A, personal feature information shown in FIG. 16B, and cognitive feature information shown in FIG. 16C. As shown in FIG. 16A, the user information database 34 stores the fundamental attribute information in association with the ID for identifying a user. The fundamental attribute information includes, for example, name, sex, age, birth date, and relationship.

As shown in FIG. 16B, moreover, the user information database 34 stores the personal feature information, such as a physical appearance for each posture of the user and his or her eye sight and hearing ability, in association with the ID for identifying the user. The personal feature information includes, for example, height and eye-level of the user in standing position, height and eye-level of the user in seated position, dominant hand, dominant eye, eye sight, and hearing ability.

As shown in FIG. 16C, in addition, the user information database 34 stores the cognitive feature information for each user. Specifically, the user information database 34 stores the cognitive feature information for each user. The cognitive feature information associates time, degree of concentration, and effective visual field area information with each other. It is noted that, in the cognitive feature information shown in FIG. 16C, visual angles are stored as the effective visual field area information.

Furthermore, the user information database 34 may associate, to store, features of the displayed content (a drama on Channel 5 in a regular broadcast and a browsing application for photos) and a positional relationship ("HG003 (0.4 and 0.6)", for example) of a person around the user with a degree of concentration. Here "HG003 (0.4 and 0.6)" indicates that the user with the ID of HG003 is positioned 0.4 meter and 0.6 meter away in the x-coordinate direction and in the y-coordinate direction, respectively.

The notification source 106 provides the notification information to the information display apparatus 30. As shown in FIG. 8, the notification source 106 may be, for example, the group of home appliances 105 (including a refrigerator, a washing machine, and a microwave) connected to the home network, the network camera 104, and the cellular phone 103.

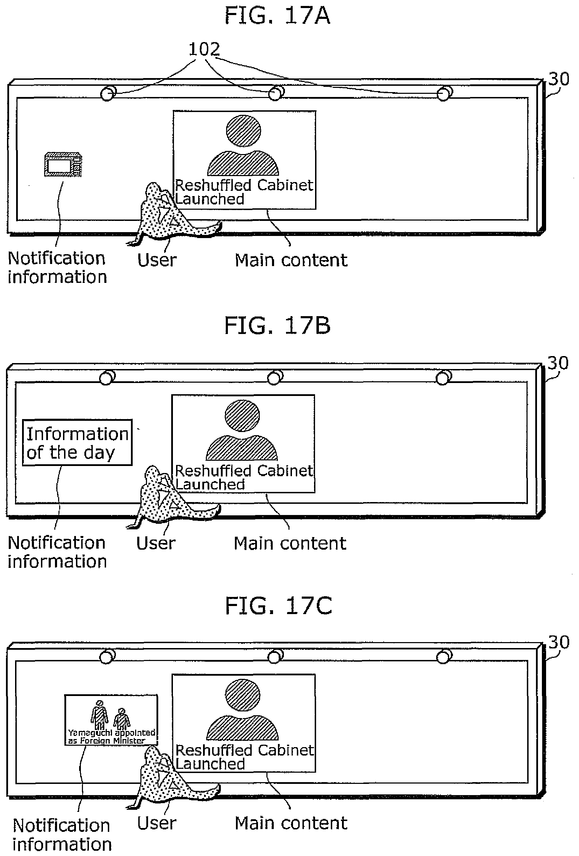

FIGS. 17A to 17C exemplify notification information according to Embodiment 3 of the present invention.

The notification information may be image information or text information including a notifying icon shown in FIG. 17A, a notifying text message shown in FIG. 17B, or a thumb nail image/footage shown in FIG. 17C.

A message which reads, "a microwave notifying of the cooking finished" is exemplified hereinafter as the notification information. As a matter of course, however, the notification information shall not be limited to this example. Various kinds of information can be the notification information, such as a notification of the state or the operation progress of an appliance, incoming electronic mail, or a notification of a schedule.

The degree-of-association estimating unit 35 calculates a degree of association "r" indicating to what degree the notification information is associated with the displayed content. The technique to calculate the degree of association shall be described later.

The application control unit 36 carries out display control using, as incoming information, (i) the user identification information provided from the user identifying unit 31, (ii) the user state provided from the user state detecting unit 32, and (iii) the user's degree of concentration provided from the degree-of-concentration estimating unit 33. In addition to the incoming information, the application control unit 36 uses incoming information provided from the user information database 34, the notification source 106, and the degree-of-association estimating unit 35 in order to carry out the display control.

When updating a rendering topic on the screen, the application control unit 36 provides, to the rendering unit 37, updating information for the rendering topic. The rendering unit 37 displays the rendering topic on the screen 38.

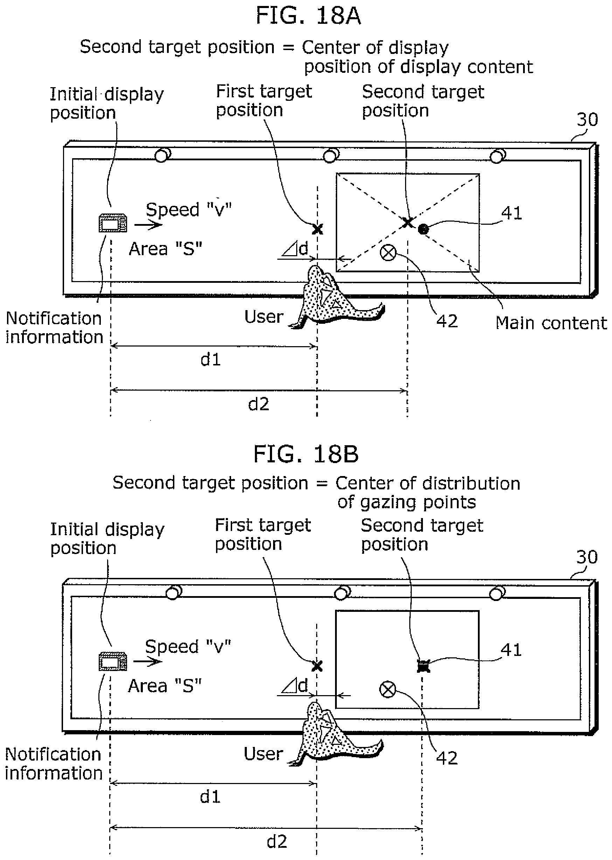

FIGS. 18A and 18B show operations of the information display apparatus 30 according to Embodiment 3 of the present invention.

FIGS 18A and 18B show the following case: When the user is watching display content (the main content) sharing a part of the screen 38 as the display area, the information display apparatus 30 displays an icon as large as an area "S" at an initial display position on the screen. Here the icon indicates the notification information provided from an appliance. The initial display position is (i) a distance "d1" away from a first target position and (ii) a distance "d2" away from a second target position.

It is noted that a center of distribution of gazing points 41 is the center position of the distribution of the gazing points detected for a predetermined time period. Furthermore, a current gazing point 42 is where the most recent gazing point of the user is detected.

Then the information display apparatus 30 gradually moves the icon from the initial display position closer to the display area of the display content which the user is watching. The icon moves at a speed of "v" in order not to give an unnecessary odd impression to the user when the information display unit 30 displays the display notification information. Here the first target position and the second target position are the target positions which the icon approaches.

First the information display apparatus 30 moves the icon from the initial display position to the first target position. In the case where the user does not keep looking at the icon for a predetermined time period even though the icon has arrived at the first target position, the information display apparatus 30 further moves the icon from the first target position to the second target position.

As shown in FIGS. 18A and 18B, the first target position is a predetermined distance "Δd" away from a boarder of the main content display area. In other words, the first target position is located (i) outside the main content display area, and (ii) near the boarder of the main content display area. Preferably, the predetermined distance "Δd" is as half as the width of the icon indicating the notification information. This width prevents the icon from entering the main content display area when the icon is displayed at the first target position.

The second target position is one of (i) a predetermined position found within the display area of the content and (ii) a position which represents two or more gazing points detected within a predetermined time period. Specifically, the second target position is one of (i) the center of the display area of the display content as shown in FIG. 18A and (ii) the center of distribution of gazing points 41 of the user as shown in FIG. 18B.

It is noted that the second target position is not necessarily the center of the display area of the display content or the center of distribution of gazing points 41 of the user. For example, the second target position may be the center of an image displayed on a part of the display area of the display content. Moreover, for example, the second target position may be the centroid of the distribution of the gazing points.

Described next are various operations of the information display apparatus 30 structured above.

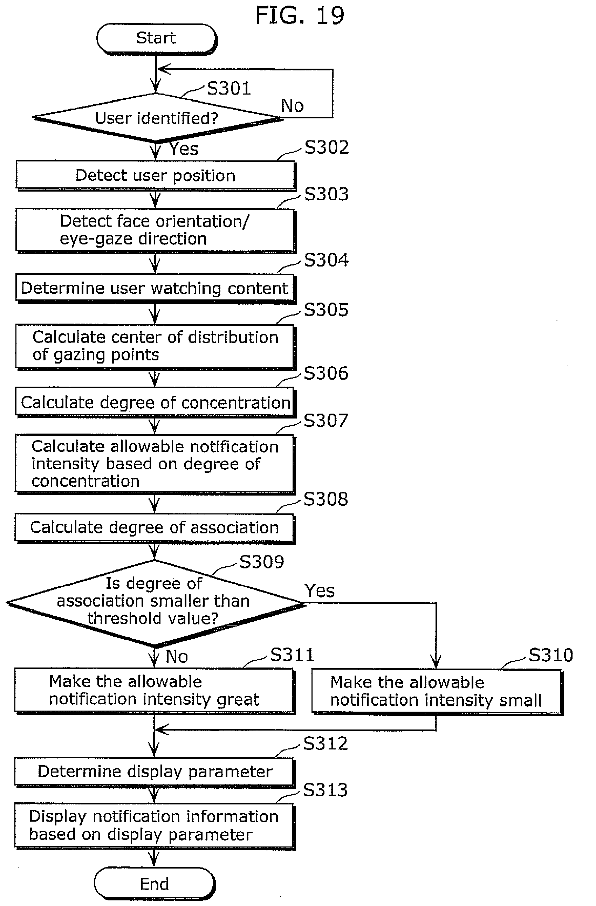

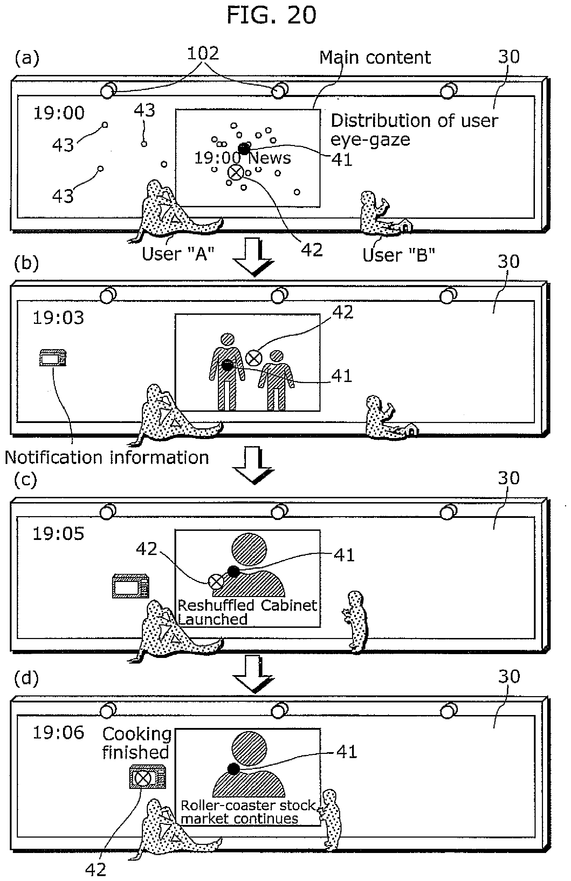

FIG. 19 is a flowchart showing a flow of a process executed on the information display apparatus 30 according to Embodiment 3 of the present invention. FIG. 20 exemplifies operations of the information display apparatus 30 according to Embodiment 3 of the present invention.

FIG. 20 shows the following scene: There are users "A" and "B" in front of the information display apparatus 30. A news program is displayed as the display content. The user "A" is the watching user of the display content, but the user "B" is not the watching user of the content. When the user "A" is watching the news program under the situation in (a) in FIG. 20, an icon is displayed at the initial display position as (b) in FIG. 20 shows, indicating the notification information from a microwave. Then, as (c) in FIG. 20 shows, the icon gradually approaches the first target position. Finally, as (d) in FIG. 20 shows, detailed information linked to the icon "Cooking finished" is displayed when the user looks at the icon.

Described hereinafter are the operations of the information display apparatus 30 with reference to the flowchart in FIG. 19, using the scene shown in FIG. 20 as an example.

First, when a user detecting camera captures faces of the users, the user identifying unit 31 identifies the users by matching the faces with the personal feature information previously stored in the user information database 34 (S301). Then the user state detecting unit 32 detects the user position of each of the identified users (S302). Furthermore, the user state detecting unit 32 detects a face orientation and an eye-gaze direction of each of the identified users (S303). In addition, the user state detecting unit 32 detects, to hold, each of current gazing points 42 based on the user positions and the eye-gaze directions.

Next, the user state detecting unit 32 determines a watching user of the display content (S304). For example, the user state detecting unit 32 may determine a user found within a predetermined distance from the display content as the watching user. Preferably, the user state detecting unit 32 determines, not as the watching user, a user who is not keep looking at the screen for a predetermined time period. In the scene of FIG. 20, the user "B" is playing instead of looking at the screen. Thus the user state detecting unit 32 determines that the user "B" is not the watching user. Thus the subsequent schemes are carried out to the user "A"; namely, the watching user.

Next, the degree-of-concentration estimating unit 33 calculates the center position (the center of distribution of gazing points 41) of the distribution of the gazing points detected for each predetermined time period. Then the degree-of-concentration estimating unit 33 calculates a degree of concentration "c" according to Expression (3) below, using the dispersion "σ" of the distances between the calculated center of distribution of gazing points 41 and a position of each of the gazing points.

[Expression 3]

$$c = \frac{1}{\sigma} \qquad \cdots (3)$$

It is noted that the greater the degree of concentration "C" is, the more concentration the user focuses on the display content.

Here the degree-of-concentration estimating unit 33 set allowable notification intensity "Int" according to Expression 4 below. The allowable notification intensity indicates a degree of intensity which makes the user aware of the notification information. When the allowable notification intensity is high, the information display apparatus 30 has to "make the user aware of the notification information". On the other hand, when the allowable notification intensity is low, the information display apparatus 30 has to let the user know the notification information without giving the user an odd impression to the notification information by "casually giving the user the notification information".

[Expression 4]

$$Int = n * c \qquad \cdots (4)$$

Here "n" represents a gain.

The user tends to realize information other than the display content more easily (i) when the degree of concentration "c" is small; that when the user does not focus on the display content than (ii) when the degree of concentration "c" is great; that is when the user focuses on the display content. Accordingly, the allowable notification intensity "Int" becomes smaller when the degree of concentration "c" is small, that is when the user does not focus on the display content.

Next, the degree-of-association estimating unit 35 calculates the degree of association "r" between the notification information and the displayed content (S308). The degree of association "r" is a numerical value between 0 and 1 inclusive. When the main content is a TV program, the degree-of-association estimating unit 35 obtains a higher degree of association in the case where the notification information is related to the program, and a lower degree of association in the case where the notification information is not related to the program. For example, the degree of association may be represented in binary: A low degree of association is 0, and a high degree of association is 1.

In the case where the degree of association "r" is smaller than a previously set threshold value (S309: Yes), the degree-of-association estimating unit 35 makes the allowable notification intensity small according to the value of the degree of association "r" (S310). In the case where the degree of association "r" is equal to or greater than the previously set threshold value (S309: No), the degree-of-association estimating unit 35 makes the allowable notification intensity great according to the value of the degree of association "r" (S311).

Then the application control unit 36 uses the allowable notification intensity "Int" to determine a display parameter of the notification information (S312). Here, the display parameter is information indicating (i) the initial display position and the size of the notification information, and (ii) a technique to move the notification information to the first target position or to the second target position. When the degree of association is low, the application control unit 36 determines the display parameter so that the user does not have an odd impression to the notification information.

Accordingly, the distance "di" between the initial display position and the target position of the notification information is calculated from Expression (5) below.

[Expression 5]

$$di = gd * \frac{1}{Int} + d0 \qquad \cdots (5)$$

Here "gd" represents a gain, and "d0" is a constant value determined in advance.

Furthermore, the moving speed "v" and the display area "S" of the notification information are calculated from Expressions (6) and (7).

[Expression 6]

$$v = gv * Int + v0 \qquad \cdots (6)$$

[Expression 7]

$$S = gS * Int + S0 \qquad \cdots (7)$$

Here "gv" and "gS" represent gains, and "v0" and "S0" are constant values determined in advance.

It is noted that the relationships of Expressions (8) to (10) below hold.

[Expression 8]

$$c \propto \frac{v * S}{di} \qquad \cdots (8)$$

[Expression 9]

$$r \propto \frac{v * S}{di} \qquad \cdots (9)$$

[Expression 10]

$$Int \propto \frac{v * S}{di} \qquad \cdots (10)$$

The application control unit 36 determines the initial display position such that, as the estimated degree of concentration "c" or degree of association "r" is smaller, the initial display position is further located from a position determined by a position of the detected gazing point. Moreover, the application control unit 36 determines a moving speed "v", such that the moving speed is faster as the estimated degree of concentration "c" or degree of association "r" is greater. In addition, the application control unit 36 determines a display area (the display area "S"), such that the display area is larger as the estimated degree of concentration "c" or degree of association "r" is greater.

Then the screen presentation unit 37 displays the notification information on the screen 38 according to the display parameter (S313). When, as (d) in FIG. 20 shows, the user pays attention to the displayed notification information; that is when the user keeps looking at the notification information for a predetermined time period, the rendering unit 37 displays the detailed information of the notification information on the screen 38. In other words, the application control unit 36 determines whether or not the distance between the display position of the notification information and the gazing point has been smaller than a threshold value for a predetermined time period. In the case where the distance is determined to be smaller for the predetermined time period, the rendering unit 37 updates the details of the notification information. In other words, the notification information is originally displayed as an icon. Once the user pays attention to the notification information, the notification information is displayed so that the user can check predetermined information linked to the icon.

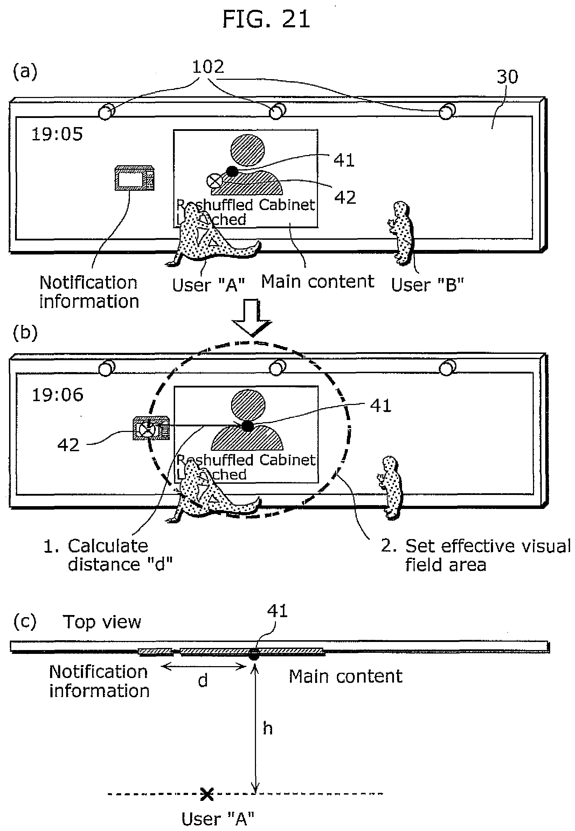

FIG. 21 shows the operations of the information display apparatus 30 according to Embodiment 3 of the present invention. Specifically, FIG. 21 shows how to update the user information database.

As (a) in FIG. 21 shows, the rendering unit 37 moves the display position of the notification information to the user A's the center of distribution of gazing points 41. Then, as FIG. 21 (b) shows, the application control unit 36 calculates the distance "d" between the current gazing point 42 and the center of distribution of gazing points 41 as soon as the user's current gazing point 42 moves to the display position of the notification information. The application control unit 36 estimates, as the effective visual field area, the area within a circle having (i) "d" in radius and (ii) the center of distribution of gazing points 41 as its center. Then the application control unit 36 updates the effective visual field area information stored in the user information database 34.It is noted that, as (c) in FIG. 21 shows, the application control unit 36 calculates a visual angle "k" according to Expression (11) where the distance between the user and the screen is "h".

[Expression 11]

$$k = \tan^{-1}\left(\frac{d}{h}\right) \qquad \cdots (11)$$

Then the application control unit 36 updates the user information database 34 shown in FIG. 16C.

As described above, the information display apparatus 30 according to Embodiment 3 has similar advantageous effects as the information display apparatus 10 of the Embodiment 1 or the information display apparatus 20 of the Embodiment 2 has.

Moreover, the information display apparatus 30 can move a display position of notification information to the first target position or the second target position. This operation allows the notification information to be presented to the user, giving the user as little an odd impression as possible.

Furthermore, the information display apparatus 30 is capable of identifying users. Thus the information display apparatus 30 takes advantage of the user information database 34 storing information for each of the users to successfully determine an initial display position with higher accuracy.

[Modification 1 in Embodiment 3]

Described next is Modification 1 in Embodiment 3. In Modification 1, the information display apparatus 30 determine the display parameter based further on one of a degree of importance "u" indicating a degree in which the notification information is important and a degree of urgency "u" indicating a degree in which the notification information is urgent.

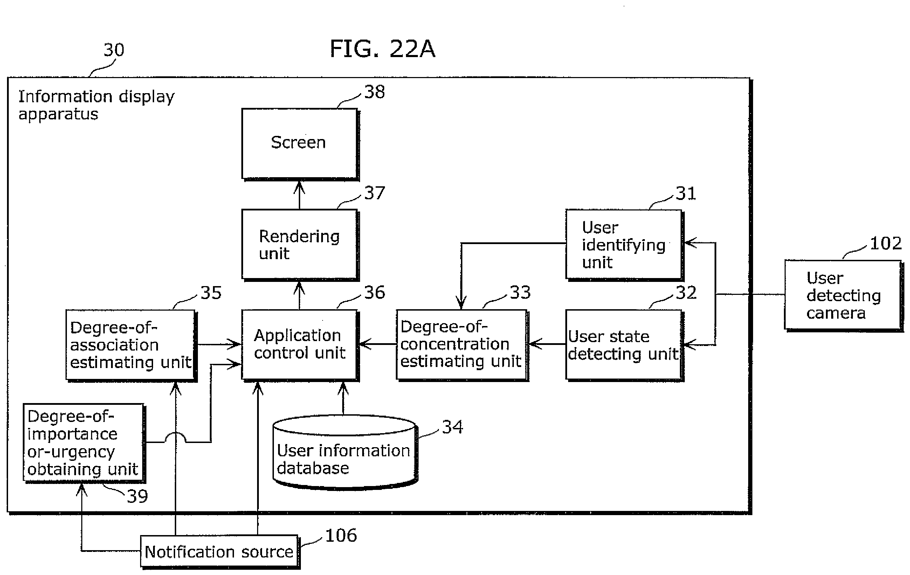

FIG.22A is a block diagram showing a functional structure of the information display apparatus 30 according to Modification 1 in Embodiment 3 of the present invention.

As shown in FIG. 22A, the information display apparatus 30 in Modification 1 further includes a degree-of-importance or -urgency obtaining unit 39 in addition to the constituent features of the information display apparatus according to Embodiment 3.

The degree-of-importance or -urgency obtaining unit 39 obtains the degree of importance indicating a degree in which the notification information is important or the degree of urgency indicating a degree in which the notification information is urgent. Specifically, for example, the degree-of-importance or -urgency obtaining unit 39 obtains the degree of importance or the degree of urgency of the notification information from the notification source 106 providing the notification information. Moreover, for example, the degree-of-importance or -urgency obtaining unit 39 may read to obtain the degree of importance or the degree of urgency of the notification information. Here the degree of importance or the degree of urgency is held in association with a kind of a notification source providing the notification information or a kind of the notification information.

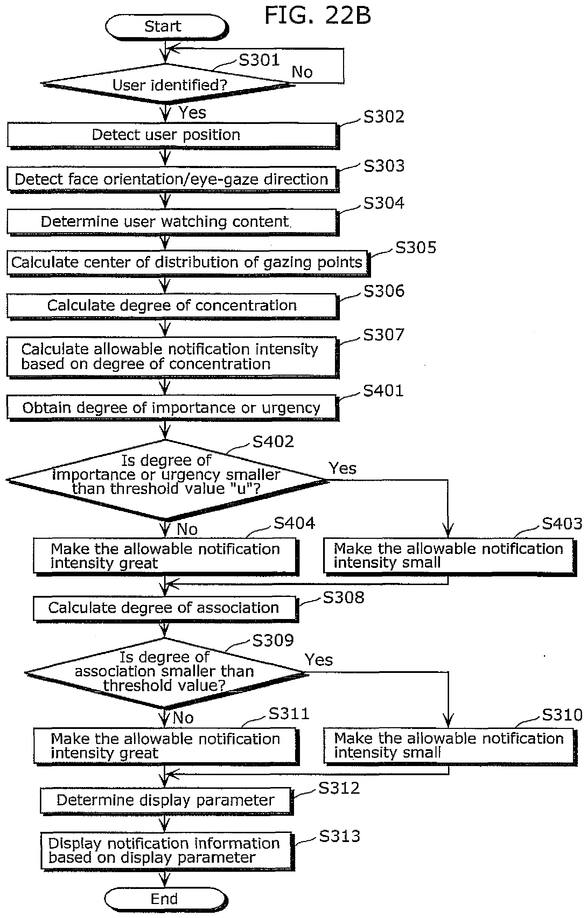

FIG. 22B is a flowchart showing a flow of a process executed on the information display apparatus 30 according to Modification 1 in Embodiment 3 of the present invention.

FIG. 22B has the flowchart in FIG. 19 include steps of obtaining the degree of importance or the degree of urgency of the notification information, and adjusting the allowable notification intensity according to the obtained degree of importance. The steps (Steps S401 to S404 in FIG 22B) allows the information display apparatus 30 to control notification based on the degree of importance or the degree of urgency of the notification information. In other words, when the degree of importance or the degree of urgency of the notification information is high, the information display apparatus 30 can make the user aware of the notification information in priority to the main content by increasing the allowable notification intensity.

It is noted that when the degree of importance or the degree of urgency of the notification information is represented as "u", the following relationship holds:

[Expression 12]

$$u \propto \frac{v * S}{di} \qquad \cdots (12)$$

[Expression 13]

$$r \propto \frac{v * S}{di} \qquad \cdots (13)$$

In other words, the application control unit 36 determines the initial display position, such that the initial display position is located farther from a position determined by positions of the detected gazing points as the obtained degree of importance "u" or degree of urgency "u" is smaller. Moreover, the application control unit 36 determines a moving speed "v", such that the moving speed is faster as the obtained degree of importance "u" or degree of urgency "u" is greater. In addition, the application control unit 36 determines a larger display area (the display area "S") as the obtained degree of importance "u" or degree of urgency "u" is greater.

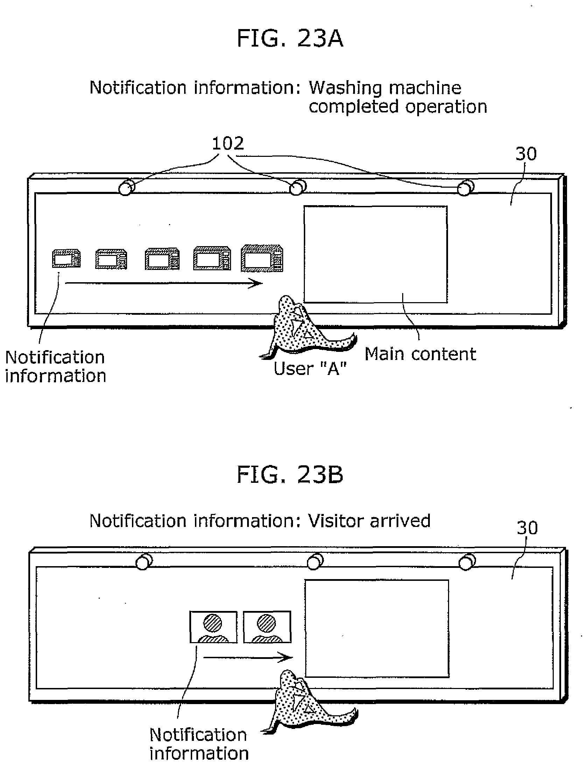

FIGS. 23A and 23B exemplify operations of the information display apparatus 30 according to Modification 1 in Embodiment 3 of the present invention.

When the notification information notifies the user of a washing machine having completed its operation as shown in FIG. 23A, the degree of urgency of the notification information is not high. Thus the information display apparatus 30 decreases the allowable notification intensity. This approach allows the distance between the initial display position and the target position of the notification information to be set longer than a predetermined value, which makes possible "casually giving the user the notification information".

On the other hand, when the notification information notifies the user of a visitor as shown in FIG. 23B, the degree of urgency of notification information is high. Thus the information display apparatus 30 increases the allowable notification intensity. This approach allows the distance between the initial display position and the target position of the notification information to be set shorter than the predetermined value, which makes possible "making the user aware of the notification information".

[Modification 2 in Embodiment 3]

Described next is Modification 2 in Embodiment 3. Modification 2 shows the case where the display position and the size of the main content are changed based on the move of the user.

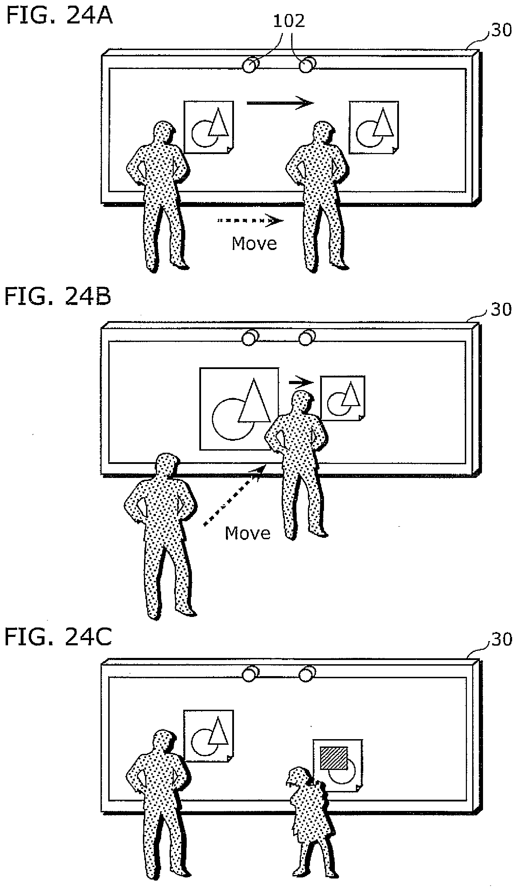

FIGS. 24A to 24C schematically show how to control a display area based on a user position according to Modification 2 in Embodiment 3 of the present invention.

Based on the user position detected by the user state detecting unit 32, the application control unit 36, for example, determines an on-screen display position of the main content to be presented to the user. As shown in FIGS. 24A and 24B, this operation allows the information display apparatus 30 to continue to present the main content at a position where the user can easily watch the main content while his or her moving.

For example, when the user moves in front of the screen 38 as shown in FIG. 24A, the application control unit 36 can display information on the screen near the user. When the user comes closer to or moves away from the screen 38 as shown in FIG. 24B, the application control unit 36 can display the information in an easily-viewable size by reducing or enlarging the display size of the information. In particular, when the user gets closer to the screen 38 so that it is determined that he or she might be interested in the displayed information, the application control unit 36 preferably change the information to be displayed as the main content to have further details. As shown in FIG. 24C, furthermore, the application control unit 36 can display the main content at an easy-to-watch eye level for each user depending on his or her height obtained when the application control unit 36 refers to the user information database 34.

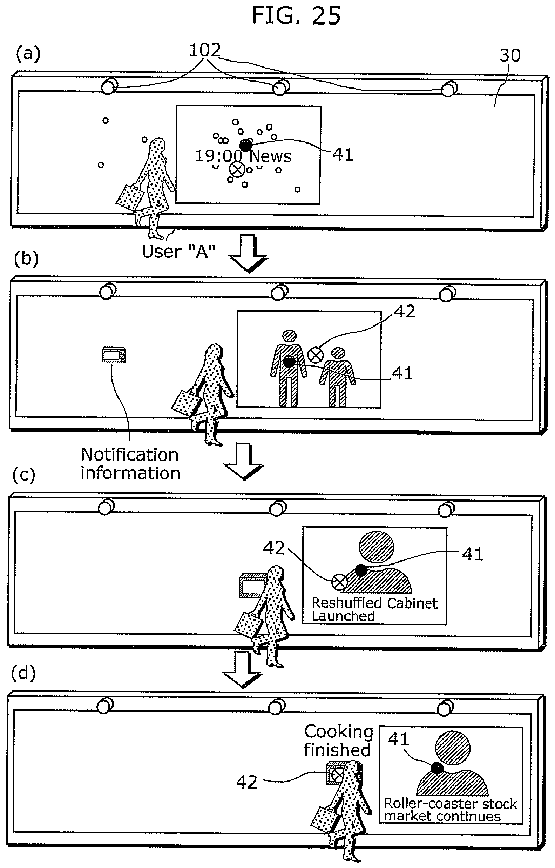

FIG. 25 exemplifies operations of the information display apparatus 30 according to Modification 2 in Embodiment 3 of the present invention.

FIG. 25 exemplifies the case where the display position of the main content follows the user position when the user passes through in front of the screen. Here the application control unit 36 moves the target position of the notification information as the user moves. In other words, when the display position of the main content moves, the application control unit 36 moves the target position of the notification information so that the target position follows the moving display position of the main content.

As described above, the information display apparatus 30 according to Modification 2 can implicitly show the user of displayed notification information even though a display position of the main content is to be changed.

[Modification 3 in Embodiment 3]

Described next is Modification 3 in Embodiment 3. Modification 3 shows the case where two or more watching users are determined.

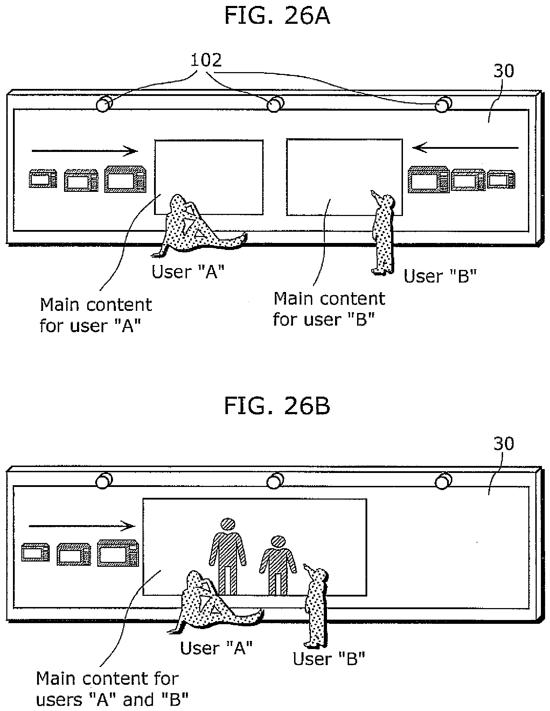

FIGS. 26 and 26B exemplify operations of the information display apparatus 30 according to Modification 3 in Embodiment 3 of the present invention. In FIGS. 26A and 26B, two or more watching users are in front of the screen 38.

Specifically, FIG. 26A shows the case where pieces of the display content corresponding to each of the users "A" and "B" are displayed on the screen. Furthermore, FIG. 26B shows the case where display content which is common to the users "A" and "B" is presented on the screen.

In the case of FIG. 26A, the information display apparatus 30 applies the process shown in FIGS. 19 or 22B to each of the users "A" and "B".

In the case of FIG. 26B, the information display apparatus 30 selects a user having a higher degree of concentration from the users "A" and "B", and calculates the allowable notification intensity based on the degree of concentration of the selected user. The information display apparatus 30 may also calculate the allowable notification intensity based on the average value between the degrees of concentration of the users "A" and "B".

Hence even though there are two or more watching users, the information display apparatus 30 in Modification 3 can determine the initial display position of the notification information so that the initial display position is located outside an effective visual field area depending on the degree of concentration of each watching user.

[Modification 3 in Embodiment 4]

Described next is Modification 4 in Embodiment 3. Embodiment 3 shows the information display apparatus 30 changing how to display the notification information based on the size of an area in which the main content is not displayed.

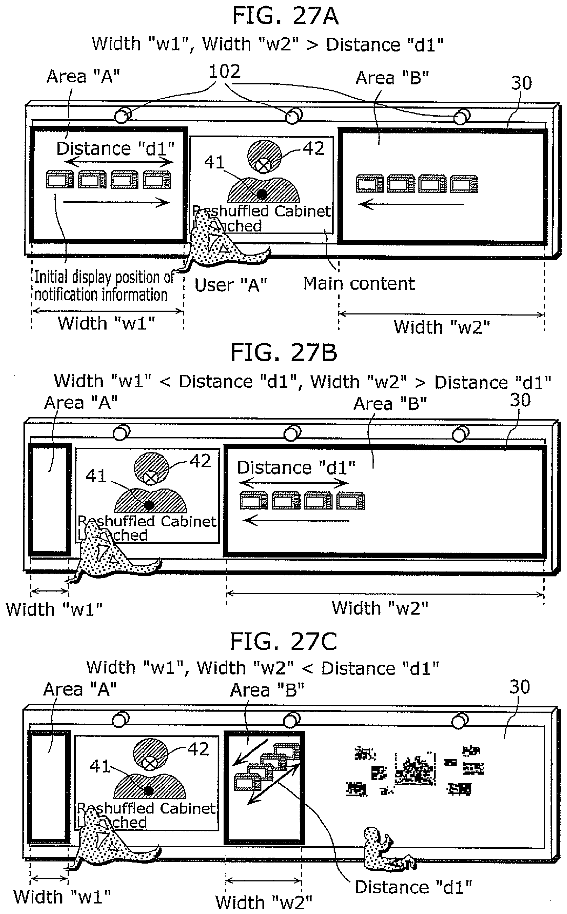

FIGS. 27A to 27C exemplify operations of the information display apparatus 30 according to Modification 4 in Embodiment 3 of the present invention.

In FIGS. 27A to 27C, suppose (i) "w1" and "w2" are the widths of areas available for displaying the notification information, and (ii) "d1" is the distance between the initial display position of the notification information and the first target position located near the boarder of the main content display area. FIG. 27A shows "the width 'w1' < the distance 'd1', the width 'w2' > the distance 'd1'", FIG. 27B shows "the width 'wl' < the distance 'd1', the width 'w2' > the distance 'd1'", and FIG. 27C shows "the width 'wl', the width 'w2' < the distance 'd1'".

When the relationship "the width 'w1', the width 'w2' > the distance 'd1'" holds, the information display apparatus 30 may display the notification information in one of or both of areas "A" and "B". Concurrently, when the relationship "the width 'w1' < the distance 'd1', the width 'w2' > the distance 'd1'" holds as shown in FIG. 27B, the information display apparatus 30 displays the notification information in the area "B" whose width is greater than the distance "d1." Furthermore, when the relationship "the width 'w1', the width 'w2' < the distance 'd1'" holds as shown in FIG. 27C, the widths of both of the areas "A" and "B" are shorter than the distance "d1''. Hence the information display apparatus 30 displays the notification information in the area "B" whose width is greater than that of the area "A".

[Modification 3 in Embodiment 5]

Described next is Modification 5 in Embodiment 3. In Modification 5, the information display apparatus 30 changes a display state of displayed notification information based on the degree of the allowable notification intensity.

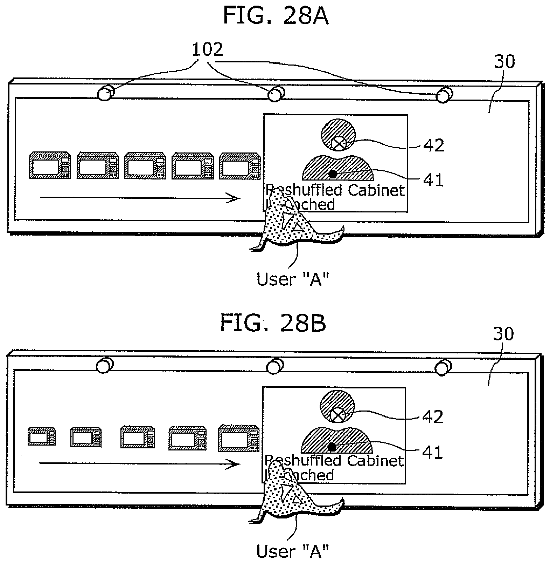

FIGS. 28A and 28B exemplify operations of the information display apparatus 30 according to Modification 5 in Embodiment 3 of the present invention.

When the allowable notification intensity is greater than a threshold value, the information display apparatus 30 moves the notification information closer to the target position with the size of the image, which the notification information indicates, kept constant as shown in FIG. 28A. Concurrently, when the allowable notification intensity is smaller than the threshold value, the information display apparatus 30 moves the notification information closer to the target position with the size of the notification information gradually enlarging as shown in FIG. 28B.

As described above, the information display apparatus 30 according to Modification 4 can change the display state of displayed notification information based on one of (i) the user's degree of concentration, (ii) a degree of association between the notification information and the display content, and (iii) a degree of importance or a degree of urgency of the notification information. Hence the information display apparatus 30 can casually show the user of the notification information.

[Modification 6 in Embodiment 3]

Described next is Modification 6 in Embodiment 3. Modification 6 describes operations executed once the display position of the notification information is moved to the target position.

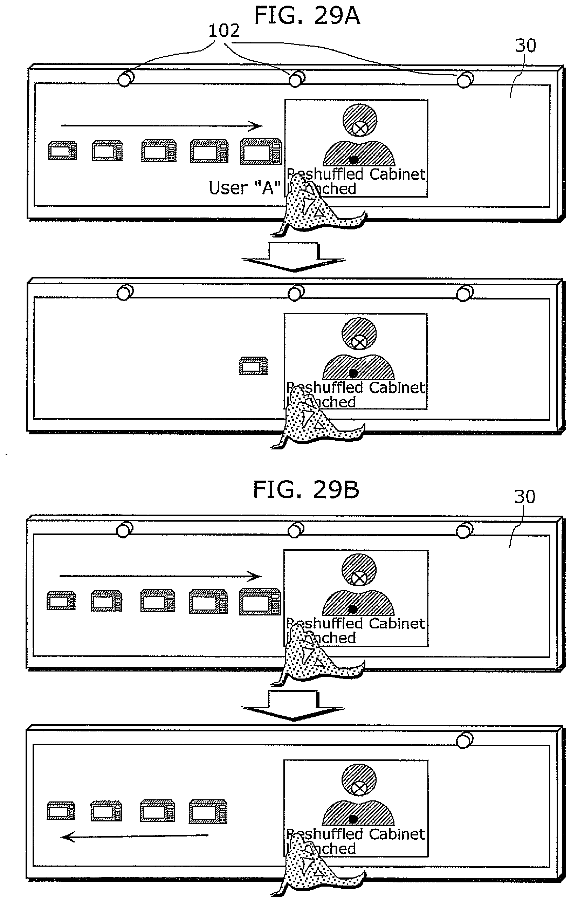

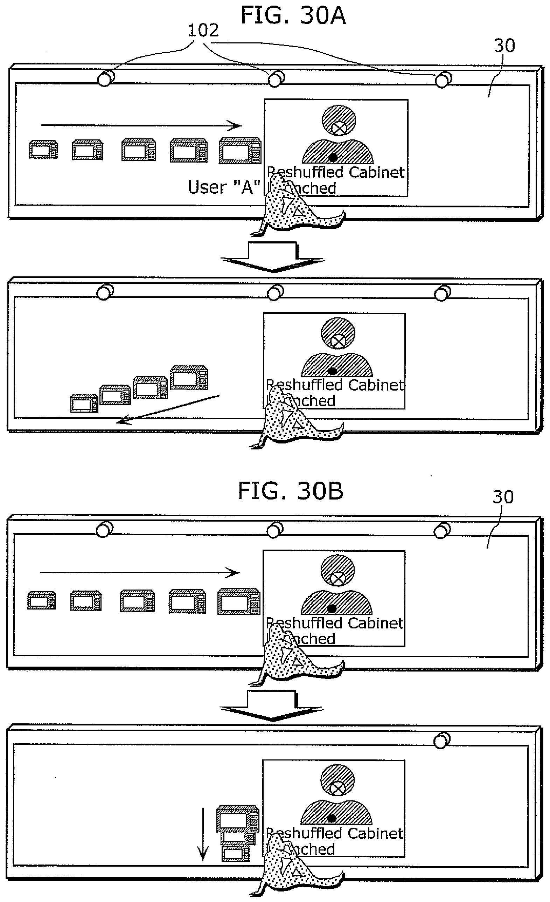

FIGS. 29A, 29B, 30A, and 30B exemplify operations of the information display apparatus 30 according to Modification 6 in Embodiment 3 of the present invention.

The application control unit 36 in Modification 6 determines whether or not the distance between a gazing point of the user and a target position has been smaller than a threshold value as long as or longer than a predetermined time period while the notification information is being displayed near the target position. When the application control unit 36 determines that the distance has not been smaller than the threshold value as long as the predetermined time period, the rendering unit 37 changes at least one of the display position and the display state of the notification information so that the notification information become less recognizable to the user.

FIG. 29A shows a specific example of the above operation. Suppose the case where the degree of importance or the degree of urgency of the notification information is not high. When the user's attention is not brought as high as a predetermined degree even though the predetermined time period has passed since the display position of the notification information was within a predetermined area from the target position, the rendering unit 37 gradually reduces the display size of the notification information to hide the notification information. Furthermore, as shown in FIG. 29B, the rendering unit 37 may gradually move the notification information from the target position so that the notification information goes away from the effective visual field area.

Moreover, in the case where the user has not looked at the notification information for the predetermined time period even though a certain time period has passed since the notification information arrived at the target position, the rendering unit 37 moves the notification information away from the target position in a predetermined direction as shown in FIGS. 30A and 30B.

Since the notification information gradually goes away from the user's effective visual field area to move to a position where the notification information is less recognizable to the user. This approach can prevent the user's attention to the display content from diverting more than necessary.

[Modification 7 in Embodiment 3]

Described next is Modification 7 in Embodiment 3. Modification 7 describes the case where the information display apparatus 30 simultaneously displays two or more pieces of notification information to the user.

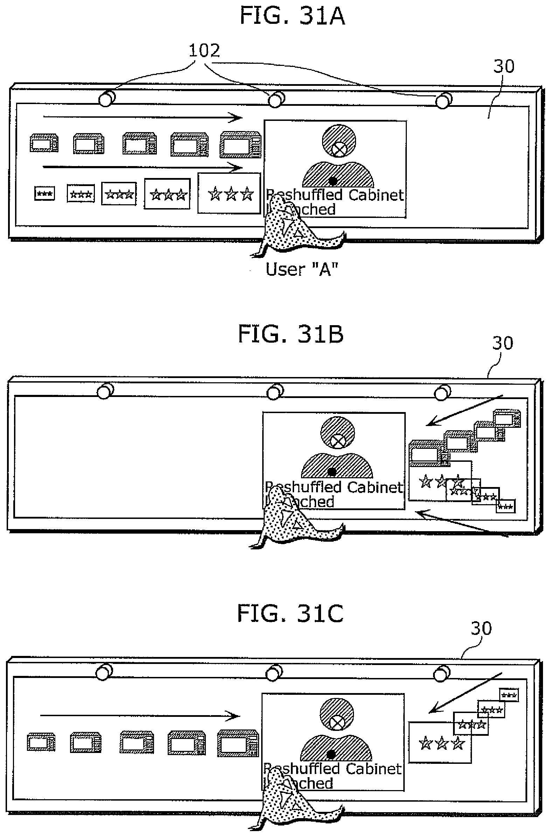

FIGS. 31A to 31C exemplify operations of the information display apparatus 30 according to Modification 7 in Embodiment 3 of the present invention.

Obviously, the present invention can be applicable to the case where pieces of notification information will be simultaneously presented to the user as shown in FIGS. 31A to 31C. As FIG. 31A or 31B specifically shows, for example, the information display apparatus 30 moves the pieces of notification information from the right or the left side of the main content display area to the target position. Moreover, for example, the information display apparatus 30 moves the pieces of notification information from both sides of the main content display area to target positions as shown in FIG. 31C.

In Modification 7, it is noted that the information display apparatus 30 also determines a display parameter indicating the initial display position and the speed of the notification information based on a degree of association between the display content and each of the pieces of notification information.

[Modification 8 in Embodiment 3]

Described next is Modification 8 in Embodiment 3. Modification 8 describes the case where the main content is displayed in full-screen.

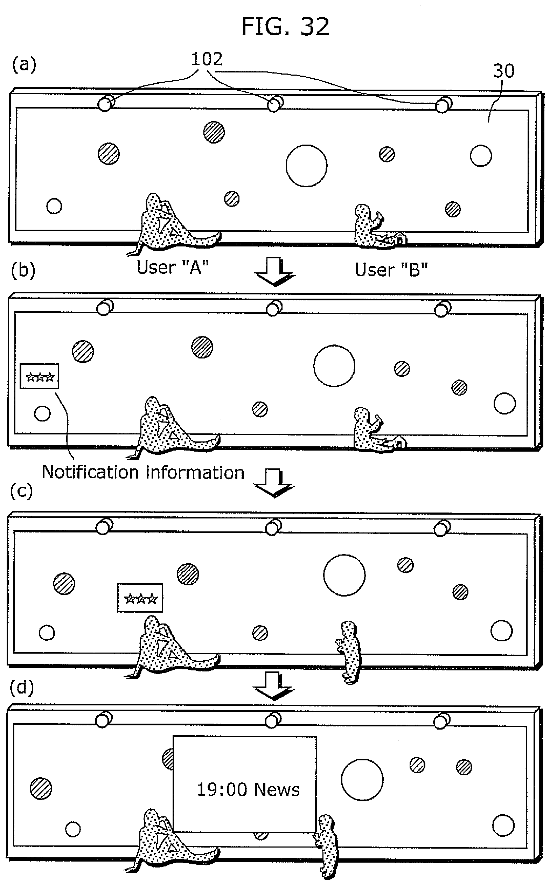

FIG. 32 exemplifies operations of the information display apparatus 30 according to Modification 8 in Embodiment 3 of the present invention.

Embodiment 3 has shown the case where the main content is displayed on a part of the screen; concurrently, the present invention can obviously be applicable to the case where the main content is displayed in full-screen as shown in FIG. 32. As (a) in FIG. 32 shows, Modification 8 exemplifies the main content with two or more objects displayed over the entire screen.

Shown in (a) in FIG. 32 is the case of (i) fish swimming in the screen or (ii) a wallpaper image displayed over the entire screen. As (b) in FIG. 32 shows, the information display apparatus 30 displays the notification information at the initial display position, and moves the displayed notification information closer to the target position. Then once detecting that the notification information has caught the user's attention as (c) in FIG. 32 shows, the information display apparatus 30 displays, on the screen, sub content which has previously been related to the notification information.

It is noted that once detecting that the notification information has caught the user's attention, the information display apparatus 30 may display a menu screen asking the user whether or not the sub content related to the notification information is to be displayed on the screen 38. Here, the information display apparatus 30 may display the sub content on the screen 38 as (d) in FIG. 32 shows when the user clearly requests the information display apparatus 30 to display the sub content via the displayed menu screen, using a remote control or the user's gestures.

It is noted that in Embodiment 3, the first target position is set to the position which is a predetermined distance "Δd" away from the boarder of the main content display area as shown in FIGS. 18A and 18B. In Modification 7, as shown in FIG. 32, the boarder of the main content display area is the frame of the screen 38. Thus the first target position is inevitably set outside the screen. Accordingly, when the main content is displayed over the entire screen, the first target position is preferably set to a position which is a predetermined distance away from the center of distribution of gazing points 41 or the center (the center of the screen 38) of the main content display area.

Although only some exemplary Embodiments of this invention have been described in detail above, those skilled in the art will readily appreciate that many modifications are possible in the exemplary Embodiments without materially departing from the novel teachings and advantages of this invention. Accordingly, all such modifications are intended to be included within the scope of this invention.

In above Modifications, for example, the information display apparatus includes a screen such as a plasma display panel and a liquid crystal display panel; however, the information display apparatus does not necessarily include a screen. The information display apparatus may be a projector projecting content on a projection area such as a screen and a wall.

Furthermore, the information display apparatus according to the aspect of the present invention may be modified below.

(1) Specifically, the information display apparatus is a computer system including a micro processor, a Read Only Memory (ROM), a Random Access Memory (RAM), a hard-disk unit, a display unit, a keyboard, and a mouse. The RAM or the hard-disk unit stores a computer program. The microprocessor operates on the computer program, which causes the information display apparatus to achieve a function thereof. Here, the computer program includes a combination of plural instruction codes sending an instruction to the computer in order to achieve a predetermined function. It is noted that the information display apparatus shall not be limited to a computer system including all of a micro processor, a Read Only Memory (ROM), a Random Access Memory (RAM), a hard-disk unit, a display unit, a keyboard, and a mouse. The information display apparatus may be a computer system including some of them.

(2) Some or all of the structural elements included in the information display apparatus may be included in a single system Large Scale Integration (LSI). A system LSI, an ultra-multifunction LSI, is manufactured with plural structural units integrated on a single chip. Specifically, the system LSI is a computer system having a micro processor, a ROM, and a RAM. The RAM stores a computer program. The microprocessor operates on the computer program, which causes the system LSI to achieve a function thereof.

The system LSI introduced here may be referred to as an Integrated circuit (IC), a super LSI, an ultra LSI, depending on integration density. Moreover, a technique of integrating into a circuit shall not be limited to the form of an LSI; instead, integration may be achieved in the form of a designated circuit or a general purpose processor. Employed as well may be the following: a Field Programmable Gate Array (FPGA) which is reprogrammable after manufacturing of the LSI; or a reconfigurable processor which makes possible reconfiguring connections and configurations of circuit cells within the LSI.

In the case where a technique of making an integrated circuit replaces the LSI thanks to advancement in a semiconductor technology or another technique which derives therefrom, such a technique may be employed to integrate functional blocks as a matter of course. Biotechnologies can be applied as the technique.

(3) Some or all of the structural elements included in the above described information display apparatus may be included in an IC card or a single module detachable to and from the information display apparatus. The IC card or the module is a computer system which consists of a micro processor, a ROM, and a RAM. The IC card or the module may also include the above described ultra-multifunction LSI. The micro processor operates on the computer program, which allows the IC card and the module to achieve the functions thereof. The IC card or the module may also be tamper-resistant.

(4) The present invention may be a method achieving operations of characteristic units included in the information display apparatus described above in steps. The method may be achieved in a form of a computer program executed on a computer or a digital signal including the computer program.

The present invention may further include a computer-readable recording medium which stores the computer program or the digital signal into the followings, for example: a flexible disk; a hard disk; a CD-ROM; a Magneto-Optical disk (MO); a Digital Versatile Disc (DVD); a DVD-ROM; a DVD-RAM; a Blu-ray Disc (BD, Registered); and a semiconductor memory. The present invention may also be the computer program or the digital signal recorded in the recording media.

The present invention may further transmit the computer program or the digital signal via a network and data broadcast mainly including an electronic communications line, a wireless or a wired communications line and the Internet.

The present invention may also be a computer system including a micro processor and a memory. The memory may store the computer program described above, and the micro processor may operate on the computer program. The present invention can be implemented by another independent computer system by storing to transfer the program or the digital signal in a recording medium or via a network.

(5) The present invention may be a combination of the above Embodiments with the above Modifications.

[Industrial Applicability]

An information display apparatus according to an aspect of the present invention initially displays the notification information outside an effective visual field area of a user, so that the information display apparatus can make the user aware of the notification information without giving the user an odd impression. Hence the information display apparatus can be used, for example, as a large-screen display to be used for one or more users for displaying the notification information.

[Reference Signs List]

10, 20, and 30 Information display apparatus
11 and 32 User state detecting unit

12 and 33 Degree-of-concentration estimating unit
13, 21, and 36 Application control unit
14, 22, and 37 Rendering unit
23 and 34 User information database
31 User identifying unit
35 Degree-of-association estimating unit
38 Screen
39 Degree-of-importance or -urgency obtaining unit
41 Center of distribution of gazing points
42 Current gazing point
101 Antenna
102 User detecting camera
103 Cellular phone
104 Network camera
105 Group of home appliances
106 Notification source
107 Router/hub

**Claims**

1. An information display apparatus (10) which displays, on a screen, notification information to be presented to a user, said information display apparatus comprising:

   a user state detecting unit (11) configured to detect, as a user state, positions of gazing points within a predetermined time period, said gazing points being found on a plane including the screen; and
   a degree-of-concentration estimating unit (12) configured to estimate a degree of concentration based on a distribution of said gazing points detected, as the user state, by said user state detecting unit within said predetermined time period, the degree of concentration indicating a degree in which the user concentrates on the screen;
   a user information database (23) which holds the degree of concentration in association with an effective visual field area information indicating a distance from the center position of the distribution of said gazing points, said effective visual field area being visible to the user,
   an application control unit (13) configured to (i) obtain an effective visual field area information associated with the degree of concentration estimated by said degree-of-concentration estimating unit with reference to said user information database (23), and (ii) determine, as an initial display position of the notification information based on the degree of concentration estimated by said degree-of-concentration estimating unit, a position which is a given length of distance away from the center position of the distribution of said gazing points, such that the initial display position is located outside the estimated effective visual field area; and
   a rendering unit (14) configured to (i) display the notification information at the initial display position determined by said application control unit, and (ii) change at least one of a display position and a display state of the displayed notification information.

2. The information display apparatus according to Claim 1,
   wherein said user state detecting unit (11) is configured to detect, as the user state, the position of the gazing point of the user, the gazing point being found on a plane including the screen, and
   said application control unit (13) is configured to determine the initial display position, such that as the degree of concentration estimated by said degree-of-concentration estimating unit is smaller, the initial display position is located farther from a position determined by the position of the gazing point detected by said user state detecting unit.

3. The information display apparatus according to Claim 1,
   wherein said application control unit (13) is further configured to determine a moving speed, such that the moving speed is faster as the degree of concentration estimated by said degree-of-concentration estimating unit is greater, and
   said rendering unit (14) is configured to move, to change, the display position of the notification information at the moving speed determined by said application control unit.

4. The information display apparatus according to Claim 1,

wherein said user state detecting unit (11) is configured to detect, as the user state, a position of a gazing point of the user, the gazing point being found on a plane including the screen, and
said rendering unit (14) is configured to move, to change, the display position of the notification information toward a position representing positions of gazing points detected by said user state detecting unit within a predetermined time period.

5. The information display apparatus according to Claim 1,
wherein said rendering unit (14) is configured to move, to change, the display position of the notification information toward a predetermined position within a display area of content displayed on the screen.

6. The information display apparatus according to Claim 1,
wherein said rendering unit (14) is configured to move, to change, the display position of the notification information toward a position which is located (i) outside a display area of content displayed on the screen and (ii) near a boarder of the display area of the content.

7. The information display apparatus according to Claim 1,
wherein said application control unit (13) is further configured to determine a size of a display area, such that the size is larger as the degree of concentration estimated by said degree-of-concentration estimating unit is greater, and when displaying the notification information at the initial display position determined by said application control unit, said rendering unit (14) is configured to display the notification information in the display area having the determined size.

8. The information display apparatus according to Claim 1, further comprising
a degree-of-association estimating unit (35) configured to estimate a degree of association indicating to what degree the notification information is associated with content displayed on the screen,
wherein said user state detecting unit (32) is configured to detect, as the user state, a position of a gazing point of the user, the gazing point being found on a plane including the screen, and
said application control unit (36) is configured to determine the initial display position, such that as the degree of association estimated by said degree-of-association estimating unit is smaller, the initial display position is located farther from a position determined by the position of the gazing point detected by said user state detecting unit.

9. The information display apparatus according to Claim 8,
wherein said application control unit (36) is further configured to determine a moving speed, such that the moving speed is faster as the degree of association estimated by said degree-of-association estimating unit is greater, and said rendering unit (37) is configured to move, to change, the display position of the notification information at the determined moving speed.

10. The information display apparatus according to Claim 1, further comprising
a degree-of-importance or -urgency obtaining unit (39) configured to obtain a degree of importance indicating to what degree the notification information is important or a degree of urgency indicating to what degree the notification information is urgent,
wherein said application control unit (36) is configured to determine the initial display position, such that as the degree of importance or the degree of urgency obtained by said degree-of-importance or -urgency obtaining unit is smaller, the initial display position is located farther from a position determined by a position of a gazing point detected by said user state detecting unit.

11. The information display apparatus according to Claim 10,
wherein said application control unit (36) is further configured to determine a moving speed, such that the moving speed is faster as the degree of importance or the degree of urgency obtained by said degree-of-importance or -urgency obtaining unit is greater, and said rendering unit is configured to move, to change, the display position of the notification information at the determined moving speed.

12. The information display apparatus according to Claim 1,
wherein said application control unit (36) is further configured to (i) determine whether or not distance between the display position of the notification information and a position of the gazing point of the user is smaller than a threshold value while said rendering unit is changing the display position of the notification information, and, when it is determined that the distance is smaller than the threshold value, (ii) update the effective visual field area information held in said user information database, using the display position.

13. The information display apparatus according to Claim 12, further comprising
a user identifying unit (31) configured to identify the user in front of the screen,
wherein said user information database (34) holds, for each of users, the degree of concentration in association with the effective visual field area information indicating the size of the effective visual field area, and
said application control unit (36) is configured to obtain the effective visual field area information associated with the user identified by said user identifying unit.

14. An information display method for displaying, on a screen, notification information to be notified to users, said information display method comprising:

detecting, as a user state, positions of gazing points within a predetermined time period, said gazing points being found on a plane including the screen;
estimating a degree of concentration based on a distribution of said gazing points detected as the user state in said detecting, the degree of concentration indicating a degree in which the user concentrates on the screen;
obtaining an effective visual field area information associated with the estimated degree of concentration, said effective visual field area being visible to the user, with reference to a user information database (23) which holds the degree of concentration in association with an effective visual field area information indicating a distance from the center position of the distribution of said gazing points;
determining, as an initial display position of notification information based on the degree of concentration estimated in said estimating, a position which is a given length of distance away from the center position of the distribution of said gazing points, so that the initial display position is located outside the estimated effective visual field area; and
rendering which includes (i) displaying the notification information at the initial display position determined by said application control unit, and (ii) changing at least one of a display position and a display state of the displayed notification information.

15. A program which causes a computer to execute said information display method according to Claim 14.

**Patentansprüche**

1. Informationsanzeigevorrichtung (10), die auf einem Bildschirm Benachrichtigungsinformationen anzeigt, die einem Benutzer angezeigt werden sollen, wobei die Informationsanzeigevorrichtung Folgendes umfasst:

eine Benutzerstatus-Erfassungseinheit (11), die so konfiguriert ist, dass sie Positionen von Blickpunkten innerhalb eines vorbestimmten Zeitraums als Benutzerstatus erfasst, wobei die Blickpunkte auf einer Ebene gefunden werden, die den Bildschirm einschließt; und
eine Konzentrationsgrad-Schätzungseinheit (12), die so konfiguriert ist, dass sie einen Konzentrationsgrad auf der Grundlage einer Verteilung der Blickpunkte schätzt, die von der Benutzerstatus-Erfassungseinheit innerhalb des vorbestimmten Zeitraums als Benutzerstatus erfasst werden, wobei der Konzentrationsgrad einen Grad angibt, mit dem sich der Benutzer auf den Bildschirm konzentriert;
eine Benutzerinformations-Datenbank (23), die den Konzentrationsgrad in Verbindung mit einer effektiven Gesichtsfeld-Bereichsinformation hält, die einen Abstand von der Mittelposition der Verteilung der Blickpunkte anzeigt, wobei der effektive Gesichtsfeldbereich für den Benutzer sichtbar ist,
eine Anwendungssteuereinheit (13), die so konfiguriert ist, dass sie (i) eine effektive Gesichtsfeld-Bereichsinformation erhält, die mit dem Konzentrationsgrad verbunden ist, der durch die Konzentrations-Schätzungseinheit in Bezug auf die Benutzerinformations-Datenbank (23) geschätzt wird, und dass sie (ii) als eine ursprüngliche Anzeigeposition der Benachrichtigungsinformationen basierend auf dem Konzentrationsgrad, der durch die Konzentrations-Schätzungseinheit geschätzt wird, eine Position bestimmt, die eine gegebene Distanzlänge von der Mittelposition der Verteilung der Blickpunkte entfernt ist, so dass die ursprüngliche Anzeigeposition außerhalb der geschätzten effektiven Gesichtsfeldfläche liegt; und
eine Wiedergabeeinheit (14), die so konfiguriert ist, dass sie (i) die Benachrichtigungsinformationen an der von der Anwendungssteuereinheit bestimmten ursprünglichen Anzeigeposition anzeigt, und (ii) mindestens eine von einer Anzeigeposition und einem Anzeigezustand der angezeigten Benachrichtigungsinformationen ändert.

2. Informationsanzeigevorrichtung nach Anspruch 1,

wobei die Benutzerstatus-Erfassungseinheit (11) so konfiguriert ist, dass sie die Position des Blickpunktes des Benutzers als Benutzerstatus erfasst, wobei der Blickpunkt auf einer Ebene gefunden wird, die den Bildschirm einschließt, und

die Anwendungssteuereinheit (13) so konfiguriert ist, dass sie die ursprüngliche Anzeigeposition bestimmt, so dass, wenn der Konzentrationsgrad, der durch die Konzentrations-Schätzungseinheit geschätzt wird, kleiner ist, die ursprüngliche Anzeigeposition weiter von einer Position entfernt ist, die durch die Position des Blickpunktes bestimmt wird, die durch die Benutzerstatus-Erfassungseinheit erfasst wird.

3. Informationsanzeigevorrichtung nach Anspruch 1,
wobei die Anwendungssteuereinheit (13) ferner so konfiguriert ist, dass sie eine Bewegungsgeschwindigkeit bestimmt, so dass die Bewegungsgeschwindigkeit schneller ist, wenn der von der Konzentrations-Schätzungseinheit geschätzte Konzentrationsgrad größer ist, und
die Wiedergabeeinheit (14) so konfiguriert ist, dass sie die Anzeigeposition der Benachrichtigungsinformationen mit der von der Anwendungssteuereinheit bestimmten Bewegungsgeschwindigkeit bewegt und ändert.

4. Informationsanzeigevorrichtung nach Anspruch 1,
wobei die Benutzerstatus-Erfassungseinheit (11) so konfiguriert ist, dass sie eine Position eines Blickpunktes des Benutzers als Benutzerstatus erfasst, wobei der Blickpunkt auf einer Ebene gefunden wird, die den Bildschirm einschließt, und
die Wiedergabeeinheit (14) so konfiguriert ist, dass sie die Anzeigeposition der Benachrichtigungsinformationen zu einer Position bewegt und ändert, die Positionen von Blickpunkten darstellt, die von der Benutzerstatus-Erfassungseinheit innerhalb einer vorbestimmten Zeitperiode erfasst werden.

5. Informationsanzeigevorrichtung nach Anspruch 1,
wobei die Wiedergabeeinheit (14) so konfiguriert ist, dass sie die Anzeigeposition der Benachrichtigungsinformationen zu einer vorbestimmten Position innerhalb eines Anzeigebereichs des auf dem Bildschirm angezeigten Inhalts bewegt und ändert.

6. Informationsanzeigevorrichtung nach Anspruch 1,
wobei die Wiedergabeeinheit (14) so konfiguriert ist, dass sie die Anzeigeposition der Benachrichtigungsinformationen zu einer Position bewegt und ändert, die sich (i) außerhalb eines auf dem Bildschirm angezeigten Anzeigebereichs des Inhalts und (ii) in der Nähe einer Grenze des Anzeigebereichs des Inhalts befindet.

7. Informationsanzeigevorrichtung nach Anspruch 1,
wobei die Anwendungssteuereinheit (13) ferner so konfiguriert ist, dass sie eine Größe eines Anzeigebereichs bestimmt, so dass die Größe größer ist, als der Konzentrationsgrad, der durch die Konzentrationsgrad-Schätzungseinheit geschätzt wird, und
wenn die Anzeige der Benachrichtigungsinformationen an der ursprünglichen Anzeigeposition angezeigt wird, die von der Anwendungssteuereinheit bestimmt wird, ist die Wiedergabeeinheit (14) so konfiguriert, dass sie die Benachrichtigungsinformationen in dem Anzeigebereich mit der bestimmten Größe anzeigt.

8. Informationsanzeigevorrichtung nach Anspruch 1, die ferner umfasst
eine Assoziationsgrad-Schätzungseinheit (35), die so konfiguriert ist, dass sie einen Assoziationsgrad schätzt, der angibt, inwieweit die Benachrichtigungsinformationen mit dem auf dem Bildschirm angezeigten Inhalt assoziiert ist,
wobei die Benutzerstatus-Erfassungseinheit (32) so konfiguriert ist, dass sie eine Position eines Blickpunktes des Benutzers als Benutzerstatus erfasst, der Blickpunkt auf einer Ebene mit dem Bildschirm gefunden wird, und
die Anwendungssteuereinheit (36) so konfiguriert ist, dass sie die ursprüngliche Anzeigeposition bestimmt, so dass die ursprüngliche Anzeigeposition weiter von einer Position entfernt ist, die durch die Position des Blickpunktes bestimmt wird, die von der Benutzerstatus-Erfassungseinheit erfasst wird, wenn der durch die Assoziationsgrad-Schätzungseinheit geschätzte Assoziationsgrad kleiner ist.

9. Informationsanzeigevorrichtung nach Anspruch 8,
wobei die Anwendungssteuereinheit (36) ferner so konfiguriert ist, dass sie eine Bewegungsgeschwindigkeit bestimmt, so dass die Bewegungsgeschwindigkeit schneller ist, wenn der Assoziationsgrad, der durch die Assoziationsgrad-Schätzungseinheit geschätzt wird, größer ist, und
die Wiedergabeeinheit (37) so konfiguriert ist, dass sie die Anzeigeposition der Benachrichtigungsinformationen mit der bestimmten Bewegungsgeschwindigkeit bewegt und ändert.

**10.** Informationsanzeigevorrichtung nach Anspruch 1, die ferner umfasst
eine Einheit (39) zur Ermittlung eines Grades der Wichtigkeit oder eines Grades der Dringlichkeit, die so konfiguriert ist, dass sie einen Grad der Wichtigkeit ermittelt, der angibt, inwieweit die Benachrichtigungsinformationen wichtig ist oder einen Grad der Dringlichkeit, der angibt, inwieweit die Benachrichtigungsinformationen dringend ist,
wobei die Anwendungssteuereinheit (36) so konfiguriert ist, dass sie die ursprüngliche Anzeigeposition bestimmt, so dass, wenn der Grad der Wichtigkeit oder der Grad der Dringlichkeit, der durch die Wichtigkeitsgrad- oder Dringlichkeitsgrad- Ermittlungseinheit ermittelt wird, kleiner ist, die ursprüngliche Anzeigeposition weiter von einer Position entfernt ist, die durch eine Position eines Blickpunktes bestimmt wird, der durch die Benutzerzustandserfassungseinheit erfasst wird.

**11.** Informationsanzeigevorrichtung nach Anspruch 10,
wobei die Anwendungssteuereinheit (36) ferner so konfiguriert ist, dass sie eine Bewegungsgeschwindigkeit bestimmt, so dass die Bewegungsgeschwindigkeit schneller ist, wenn der Wichtigkeitsgrad oder der Dringlichkeitsgrad, der durch die Wichtigkeitsgrad- oder Dringlichkeitsgrad-Ermittlungseinheit ermittelt wird, größer ist, und
die Wiedergabeeinheit so konfiguriert ist, dass sie die Anzeigeposition der Benachrichtigungsinformationen mit der bestimmten Bewegungsgeschwindigkeit bewegt und ändert.

**12.** Informationsanzeigevorrichtung nach Anspruch 1,
wobei die Anwendungssteuereinheit (36) ferner so konfiguriert ist, dass sie (i) feststellt, ob der Abstand zwischen der Anzeigeposition der Benachrichtigungsinformationen und einer Position des Blickpunktes des Benutzers kleiner als ein Schwellenwert ist oder nicht, während die Wiedergabeeinheit die Anzeigeposition der Benachrichtigungsinformationen ändert, und, wenn festgestellt wird, dass der Abstand kleiner als der Schwellenwert ist, sie (ii) die in der Benutzerinformations-Datenbank aufbewahrte effektive Gesichtsfeld-Bereichsinformation unter Verwendung der Anzeigeposition aktualisiert.

**13.** Informationsanzeigevorrichtung nach Anspruch 12, die ferner umfasst
eine Benutzeridentifizierungseinheit (31), die so konfiguriert ist, dass sie den Benutzer vor dem Bildschirm identifiziert,
wobei die Benutzerinformations-Datenbank (34) für jeden Benutzer den Grad der Konzentration in Verbindung mit der effektiven Gesichtsfeld-Bereichsinformation, die die Größe des effektiven Gesichtsfeldbereichs angibt, aufbewahrt, und
die Anwendungssteuereinheit (36) so konfiguriert ist, dass sie die effektive Gesichtsfeld-Bereichsinformation ermittelt, die dem durch die Benutzeridentifizierungseinheit identifizierten Benutzer zugeordnet ist.

**14.** Informationsanzeigeverfahren zum Anzeigen von Benachrichtigungsinformationen auf einem Bildschirm, die den Benutzern mitzuteilen sind, wobei das Informationsanzeigeverfahren Folgendes umfasst:

Erfassen von Positionen von Blickpunkten innerhalb eines vorbestimmten Zeitraums als Benutzerstatus, wobei die Blickpunkte auf einer Ebene gefunden werden, die den Bildschirm einschließt;
Schätzen eines Konzentrationsgrads auf der Grundlage einer Verteilung der als Benutzerstatus erfassten Blickpunkte, wobei der Konzentrationsgrad einen Grad angibt, mit dem sich der Benutzer auf den Bildschirm konzentriert;
Ermitteln einer effektiven Gesichtsfeld-Bereichsinformation, die mit dem geschätzten Konzentrationsgrad verbunden ist, wobei der effektive Gesichtsfeldbereich für den Benutzer sichtbar ist, in Bezug auf eine Benutzerinformations-Datenbank (23), die den Konzentrationsgrad in Verbindung mit einer effektiven Gesichtsfeld-Bereichsinformation, die einen Abstand von der Mittelposition der Verteilung der Blickpunkte anzeigt;
Bestimmen von Benachrichtigungsinformationen als eine ursprüngliche Anzeigeposition basierend auf dem in der Schätzung geschätzten Konzentrationsgrad, einer Position, die eine gegebene Länge der Entfernung von der Mittelposition der Verteilung der Blickpunkte ist, so dass die ursprüngliche Anzeigeposition außerhalb des geschätzten effektiven Gesichtsfeldbereichs liegt; und
Wiedergabe, was (i) die Anzeige der Benachrichtigungsinformationen an der von der Anwendungssteuereinheit bestimmten ursprünglichen Anzeigeposition beinhaltet, und (ii) Ändern von zumindest einer der Anzeigepositionen und einem Anzeigestatus der angezeigten Benachrichtigungsinformationen.

**15.** Programm, das einen Rechner dazu veranlasst, das Informationsanzeigeverfahren nach Anspruch 14 durchzuführen.

**Revendications**

1. Appareil d'affichage d'informations (10) qui affiche, sur un écran, des informations de notification à présenter à un utilisateur, dans lequel ledit appareil d'affichage d'informations comprend :

   une unité de détection d'état d'utilisateur (11) configurée pour détecter, en tant qu'état d'utilisateur, les positions de points d'observation dans une période de temps prédéterminée, dans lequel lesdits points d'observation sont trouvés sur un plan qui comprend l'écran ; et

   une unité d'estimation de degré de concentration (12) configurée pour estimer un degré de concentration sur la base d'une distribution desdits points d'observation détectés, en tant qu'état d'utilisateur, par ladite unité de détection d'état d'utilisateur dans ladite période de temps prédéterminée, dans lequel le degré de concentration indique un degré auquel l'utilisateur se concentre sur l'écran ;

   une base de données d'informations d'utilisateur (23) qui contient le degré de concentration en association avec des informations de zone de champ visuel efficace qui indiquent une distance par rapport à la position centrale de la distribution desdits points d'observation, dans lequel ladite zone de champ visuel efficace est visible par l'utilisateur,

   une unité de commande d'application (13) configurée pour (i) obtenir des informations de zone de champ visuel efficace associées au degré de concentration estimé par ladite unité d'estimation de degré de concentration avec référence à ladite base de données d'informations d'utilisateur (23), et (ii) déterminer, en tant que position d'affichage initiale des informations de notification basées sur le degré de concentration estimé par ladite unité d'estimation de degré de concentration, une position qui est éloignée d'une longueur de distance donnée de la position centrale de la distribution desdits points d'observation, de sorte que la position d'affichage initiale soit située à l'extérieur de la zone de champ visuel efficace estimée ; et

   une unité de rendu (14) configurée pour (i) afficher les informations de notification à la position d'affichage initiale déterminée par ladite unité de commande d'application, et (ii) changer au moins l'un d'une position d'affichage et d'un état d'affichage des informations de notification affichées.

2. Appareil d'affichage d'informations selon la revendication 1,
   dans lequel ladite unité de détection d'état d'utilisateur (11) est configurée pour détecter, en tant qu'état d'utilisateur, la position du point d'observation de l'utilisateur, dans lequel le point d'observation est trouvé sur un plan qui comprend l'écran, et
   ladite unité de commande d'application (13) est configurée pour déterminer la position d'affichage initiale, de sorte que, alors que le degré de concentration estimé par ladite unité d'estimation de degré de concentration est plus faible, la position d'affichage initiale soit située plus loin d'une position déterminée par la position du point d'observation détecté par ladite unité de détection d'état d'utilisateur.

3. Appareil d'affichage d'informations selon la revendication 1,
   dans lequel ladite unité de commande d'application (13) est en outre configurée pour déterminer une vitesse de déplacement, de sorte que la vitesse de déplacement soit plus rapide alors que le degré de concentration estimé par ladite unité d'estimation de degré de concentration est plus grand, et
   ladite unité de rendu (14) est configurée pour déplacer, pour changer, la position d'affichage des informations de notification à la vitesse de déplacement déterminée par ladite unité de commande d'application.

4. Appareil d'affichage d'informations selon la revendication 1,
   dans lequel ladite unité de détection d'état d'utilisateur (11) est configurée pour détecter, en tant qu'état d'utilisateur, une position d'un point d'observation de l'utilisateur, dans lequel le point d'observation est trouvé sur un plan qui comprend l'écran, et
   ladite unité de rendu (14) est configurée pour déplacer, pour changer, la position d'affichage des informations de notification vers une position qui représente les positions des points d'observation détectés par ladite unité de détection d'état d'utilisateur dans une période de temps prédéterminée.

5. Appareil d'affichage d'informations selon la revendication 1,
   dans lequel ladite unité de rendu (14) est configurée pour déplacer, pour changer, la position d'affichage des informations de notification vers une position prédéterminée dans une zone d'affichage de contenu affichée sur l'écran.

6. Appareil d'affichage d'informations selon la revendication 1,
   dans lequel ladite unité de rendu (14) est configurée pour déplacer, pour changer, la position d'affichage des

EP 2 395 420 B1

informations de notification vers une position qui est située (i) à l'extérieur d'une zone d'affichage de contenu affichée sur l'écran et (ii) à proximité d'une bordure de la zone d'affichage du contenu.

7. Appareil d'affichage d'informations selon la revendication 1,
dans lequel ladite unité de commande d'application (13) est en outre configurée pour déterminer une taille d'une zone d'affichage, de sorte que la taille soit plus grande alors que le degré de concentration estimé par ladite unité d'estimation de degré de concentration est plus grand, et
lors de l'affichage des informations de notification à la position d'affichage initiale déterminée par ladite unité de commande d'application, ladite unité de rendu (14) est configurée pour afficher les informations de notification dans la zone d'affichage qui présente la taille déterminée.

8. Appareil d'affichage d'informations selon la revendication 1, qui comprend en outre
une unité d'estimation de degré d'association (35) configurée pour estimer un degré d'association qui indique à quel degré les informations de notification sont associées au contenu affiché sur l'écran,
dans lequel ladite unité de détection d'état d'utilisateur (32) est configurée pour détecter, en tant qu'état d'utilisateur, une position d'un point d'observation de l'utilisateur, dans lequel le point d'observation est trouvé sur un plan qui comprend l'écran, et
ladite unité de commande d'application (36) est configurée pour déterminer la position d'affichage initiale, de sorte que, alors que le degré d'association estimé par ladite unité d'estimation de degré d'association est plus faible, la position d'affichage initiale soit située plus loin d'une position déterminée par la position du point d'observation détecté par ladite unité de détection d'état d'utilisateur.

9. Appareil d'affichage d'informations selon la revendication 8,
dans lequel ladite unité de commande d'application (36) est en outre configurée pour déterminer une vitesse de déplacement, de sorte que la vitesse de déplacement soit plus rapide alors que le degré d'association estimé par ladite unité d'estimation de degré d'association est plus grand, et
ladite unité de rendu (37) est configurée pour déplacer, pour changer, la position d'affichage des informations de notification à la vitesse de déplacement déterminée.

10. Appareil d'affichage d'informations selon la revendication 1, qui comprend en outre
une unité d'obtention de degré d'importance ou d'urgence (39) configurée pour obtenir un degré d'importance qui indique à quel degré les informations de notification sont importantes ou un degré d'urgence qui indique à quel degré les informations de notification sont urgentes,
dans lequel ladite unité de commande d'application (36) est configurée pour déterminer la position d'affichage initiale, de sorte que, alors que le degré d'importance ou le degré d'urgence obtenu par ladite unité d'obtention de degré d'importance ou d'urgence est plus faible, la position d'affichage initiale soit située plus loin d'une position déterminée par une position d'un point d'observation détecté par ladite unité de détection d'état d'utilisateur.

11. Appareil d'affichage d'informations selon la revendication 10,
dans lequel ladite unité de commande d'application (36) est en outre configurée pour déterminer une vitesse de déplacement, de sorte que la vitesse de déplacement soit plus rapide alors que le degré d'importance ou le degré d'urgence obtenu par ladite unité d'obtention de degré d'importance ou d'urgence est plus grand, et
ladite unité de rendu est configurée pour déplacer, pour changer, la position d'affichage des informations de notification à la vitesse de déplacement déterminée.

12. Appareil d'affichage d'informations selon la revendication 1,
dans lequel ladite unité de commande d'application (36) est en outre configurée pour (i) déterminer si, oui ou non, la distance entre la position d'affichage des informations de notification et une position du point d'observation de l'utilisateur est inférieure à une valeur de seuil alors que ladite unité de rendu change la position d'affichage des informations de notification, et, lorsqu'il est déterminé que la distance est inférieure à la valeur de seuil, (ii) mettre à jour les informations de zone de champ visuel efficace contenues dans ladite base de données d'informations d'utilisateur, en utilisant la position d'affichage.

13. Appareil d'affichage d'informations selon la revendication 12, qui comprend en outre
une unité d'identification d'utilisateur (31) configurée pour identifier l'utilisateur devant l'écran,
dans lequel ladite base de données d'informations d'utilisateur (34) contient, pour chacun des utilisateurs, le degré de concentration en association avec les informations de zone de champ visuel efficace qui indiquent la taille de la zone de champ visuel efficace, et

ladite unité de commande d'application (36) est configurée pour obtenir les informations de zone de champ visuel efficace associées à l'utilisateur identifié par ladite unité d'identification d'utilisateur.

14. Procédé d'affichage d'informations pour afficher, sur un écran, des informations de notification à notifier à des utilisateurs, dans lequel ledit procédé d'affichage d'informations comprend :

la détection, en tant qu'état d'utilisateur, des positions de points d'observation dans une période de temps prédéterminée, dans lequel lesdits points d'observation sont trouvés sur un plan qui comprend l'écran ;

l'estimation d'un degré de concentration sur la base d'une distribution desdits points d'observation détectés en tant qu'état d'utilisateur lors de ladite détection, dans lequel le degré de concentration indique un degré auquel l'utilisateur se concentre sur l'écran ;

l'obtention d'informations de zone de champ visuel efficace associées au degré de concentration estimé, dans lequel ladite zone de champ visuel efficace est visible par l'utilisateur, avec référence à une base de données d'informations d'utilisateur (23) qui contient le degré de concentration en association avec des informations de zone de champ visuel efficace qui indiquent une distance par rapport à la position centrale de la distribution desdits points d'observation ;

la détermination, en tant que position d'affichage initiale des informations de notification basées sur le degré de concentration estimé lors de ladite estimation, d'une position qui est éloignée d'une longueur de distance donnée de la position centrale de la distribution desdits points d'observation, de sorte que la position d'affichage initiale soit située à l'extérieur de la zone de champ visuel efficace estimée ; et

le rendu qui comprend (i) l'affichage des informations de notification à la position d'affichage initiale déterminée par ladite unité de commande d'application, et (ii) le changement d'au moins l'un d'une position d'affichage et d'un état d'affichage des informations de notification affichées.

15. Programme qui amène un ordinateur à exécuter ledit procédé d'affichage d'informations selon la revendication 14.

FIG. 1

# FIG. 2

10

## Information display apparatus

11

User state
detecting
unit

12

Degree-of-
concentration
estimating unit

13

Application
control unit

14

Rendering unit

# FIG. 3

```
        ┌─────────────┐
        │    Start    │
        └─────────────┘
               │              ╱S102
               ▼
┌──────────────────────────────┐
│       Detect user state      │
└──────────────────────────────┘
               │              ╱S104
               ▼
┌──────────────────────────────┐
│ Estimate degree of concentration │
└──────────────────────────────┘
               │              ╱S106
               ▼
┌──────────────────────────────┐
│  Determine initial display position │
└──────────────────────────────┘
               │              ╱S108
               ▼
┌──────────────────────────────┐
│    Display notification information │
│      at initial display position    │
└──────────────────────────────┘
               │              ╱S110
               ▼
┌──────────────────────────────┐
│   Change at least one of display │
│     position and display state of   │
│       notification information      │
└──────────────────────────────┘
               │
               ▼
        ┌─────────────┐
        │     End     │
        └─────────────┘
```

# FIG. 4

Peripheral visual field area

10

Notification information

Effective
visual
field area

Move

Initial
display
position

FIG. 5

20

Information display apparatus

11

User state
detecting
unit

12

Degree-of-
concentration
estimating unit

21

Application
control unit

23

User
information
database

22

Rendering
unit

FIG. 6

| Degree of concentration | Effective visual field area information (m) |
|---|---|
| 1.0 | 0.4 |
| 0.9 | 0.45 |
| 0.8 | 0.5 |
| ... | ... |

# FIG. 7

Start

↓ S102

Detect user state

↓ S104

Estimate degree of concentration

↓ S202

Obtain effective visual field area information corresponding to degree of concentration

↓ S204

Determine initial display position

↓ S206

Display notification information at initial display position

↓ S208

Change display position of notification information

↓ S210

Detect gazing point

↓ S212

Distance between display position and gazing point < threshold value? — No

↓ Yes    S214

Update user information database

↓

End

# FIG. 8

Broadcast

Antenna
101

Internet

User detecting camera 102

Screen 38

107

Information displaying apparatus 30

Router/Hub

106

Wireless transmission

Notification source

Cellular phone
103

Network camera
104

Refrigerator

Washing machine

Microwave

Air conditioner

Lighting

...

Group of home appliances
105

## FIG. 9

**Information display apparatus** 30

- Screen 38
- Rendering unit 37
- Degree-of-association estimating unit 35
- Application control unit 36
- User information database 34
- Degree-of-concentration estimating unit 33
- User state detecting unit 32
- User identifying unit 31
- User detecting camera 102
- Notification source 106

EP 2 395 420 B1

# FIG. 10A

102

30

B

D

User area

# FIG. 10B

Position measurement
target

D

Camera mounting surface
(Screen of information
display apparatus)

B

f

Imaging surface (Image)

Z

Corresponding
position

FIG. 11

```
                        ( Start )
                                              ╭─S510
    ┌─ ─ ─ ─ ─ ─ ─ ─ ─ ─ ─ ─ ─ ─ ─ ─ ─ ─ ─┐
    │                    ▼          S512    │
    │        ┌───────────────────┐         │
    │        │ Detect face region│         │
    │        └───────────────────┘         │
    │                    ▼          ╭─S514  │
    │     ┌──────────────────────────┐     │
    │     │ Cut out region image having│    │
    │     │ face part feature point   │    │
    │     └──────────────────────────┘     │
    │                    ▼          ╭─S516  │
    │     ┌──────────────────────────┐     │
    │     │ Calculate correlation degree│   │
    │     └──────────────────────────┘     │
    │                    ▼          ╭─S518  │
    │     ┌──────────────────────────┐     │
    │     │ Detect orientation of user's face│
    │     └──────────────────────────┘     │
    └─ ─ ─ ─ ─ ─ ─ ─ ─ ─ ─ ─ ─ ─ ─ ─ ─ ─ ─┘
    ┌─ ─ ─ ─ ─ ─ ─ ─ ─ ─ ─ ─ ─ ─ ─ ─ ─ ─ ─┐
    │                    ▼                  │
    │       ┌─────────────────────┐  ╭─S530│
  S532 ─────│ Detect three-dimensional│    │
    │       │ position of inner corner of eye│
    │       └─────────────────────┘        │
    │                    ▼                  │
  S534 ─────│ Detect three-dimensional position│
    │       │ of center of black part of eye│   │
    │       └─────────────────────┘        │
    │                    ▼                  │
  S536 ─────│ Detect relative eye-gaze direction│
    │       └─────────────────────┘        │
    └─ ─ ─ ─ ─ ─ ─ ─ ─ ─ ─ ─ ─ ─ ─ ─ ─ ─ ─┘
                         ▼        ╭─S550
           ┌──────────────────────┐
           │ Detect eye-gaze direction│
           └──────────────────────┘
                         ▼
                      ( End )
```

FIG. 12

# FIG. 13

Center of eyeball

Midpoint between
left and right pupil

Inner corner
of right eye

Inner corner
of left eye

R

θ

d

Eye-gaze direction

Eye-gaze reference plane

FIG. 14

FIG. 15

Second region    First region

Fundamental attribute information  **FIG. 16A**

| ID | Name | Sex | Age | Relationship | ... |
|---|---|---|---|---|---|
| HG001 | HIGASHINO, Taro | Male | 34 | Father | ... |
| HG002 | HIGASHINO, Hanako | Female | 32 | Mother | ... |
| HG003 | HIGASHINO, Daisuke | Male | 5 | Child | ... |
| ... | ... | ... | ... | ... | ... |
| HG015 | NISHIYAMA, Jiro | Male | 33 | Friend of father | ... |
| ... | ... | ... | ... | ... | ... |

Personal feature information  **FIG. 16B**

| ID | Height of user in standing position (Eye level) | Height of user in seated position (Eye level) | Dominant eye | Eye sight Left/Right | ... |
|---|---|---|---|---|---|
| HG001 | 1.76(1.55) | 1.26(1.06) | left eye | 0.8/0.7 | ... |
| HG002 | 1.65(1.43) | 1.16(1.23) | right eye | 0.9/0.9 | ... |
| HG003 | 1.01(0.84) | 0.67(0.47) | right eye | 1.2/1.2 | ... |
| ... | ... | ... | ... | | ... |
| HG015 | 1.82(1.62) | 1.29(1.43) | left eye | 0.3/0.3 | ... |
| ... | ... | ... | ... | | ... |

Cognitive feature information
ID: HG001  **FIG. 16C**

| Time | Degree of concent-ration | Effective visual field area information Content | Content | Positional relationship of person around user | ... |
|---|---|---|---|---|---|
| 20150215 10:30 | 0.80 | 15° | Drama on Channel 5 in terrestrial broadcast | None | ... |
| 20150215 11:00 | 0.85 | 17° | Drama on Channel 5 in terrestrial broadcast | None | ... |
| 20150215 14:30 | 0.30 | 7° | Browsing photo | HG003(0.4,0.6) | ... |
| ... | ... | ... | ... | ... | ... |

## FIG. 17A

Notification information      User      Main content

## FIG. 17B

Notification information      User      Main content

## FIG. 17C

Notification information      User      Main content

## FIG. 18A

Second target position = Center of display
position of display content

Initial display
position

First target
position

Second target
position

30

Speed "v"

Area "S"

41

Notification
information

User

42

Main content

d1

d2

## FIG. 18B

Second target position = Center of distribution
of gazing points

Initial display
position

First target
position

Second target
position

30

Speed "v"

Area "S"

41

Notification
information

User

42

d1

d2

## FIG. 19

```
                  ┌─────────────┐
                  │    Start     │
                  └──────┬──────┘
                         │    ┌──────────────────┐
                         ▼   ╱S301              No
              ╱─────────────────────╲──────────────┘
              ╲   User identified?   ╱
               ╲───────────┬────────╱
                      Yes  ▼          ╱S302
              ┌─────────────────────────────┐
              │    Detect user position       │
              └──────────────┬──────────────┘
                             ▼                 ╱S303
              ┌─────────────────────────────┐
              │   Detect face orientation/    │
              │   eye-gaze direction          │
              └──────────────┬──────────────┘
                             ▼                 ╱S304
              ┌─────────────────────────────┐
              │ Determine user watching content│
              └──────────────┬──────────────┘
                             ▼                 ╱S305
              ┌─────────────────────────────┐
              │  Calculate center of distribution│
              │  of gazing points              │
              └──────────────┬──────────────┘
                             ▼                 ╱S306
              ┌─────────────────────────────┐
              │ Calculate degree of concentration│
              └──────────────┬──────────────┘
                             ▼                 ╱S307
              ┌─────────────────────────────┐
              │  Calculate allowable notification│
              │  intensity based on degree of   │
              │  concentration                  │
              └──────────────┬──────────────┘
                             ▼                 ╱S308
              ┌─────────────────────────────┐
              │  Calculate degree of association│
              └──────────────┬──────────────┘
                             ▼         ╱S309
              ╱───────────────────────────╲
              ╲    Is degree of            ╱  Yes
              ╲ association smaller than   ╱─────────┐
              ╲    threshold value?       ╱          │
               ╲─────────────┬──────────╱            │
                       No    ▼   ╱S311               ▼   ╱S310
              ┌───────────────────────┐  ┌───────────────────────┐
              │   Make the allowable   │  │   Make the allowable   │
              │ notification intensity │  │ notification intensity │
              │        great            │  │        small           │
              └───────────┬───────────┘  └───────────┬───────────┘
                          ▼◄───────────────────────────┘
                          ▼                 ╱S312
              ┌─────────────────────────────┐
              │   Determine display parameter  │
              └──────────────┬──────────────┘
                             ▼                 ╱S313
              ┌─────────────────────────────┐
              │  Display notification information│
              │  based on display parameter     │
              └──────────────┬──────────────┘
                             ▼
                  ┌─────────────┐
                  │     End      │
                  └─────────────┘
```

# FIG. 20

(a)

(b)

(c)

(d)

# FIG. 21

(a)

102

30

19:05

41

42

Reshuffled Cabinet
Launched

Notification
information

User "A"  Main content  User "B"

(b)

19:06

41

42

Reshuffled Cabinet
Launched

1. Calculate
distance "d"

2. Set effective visual
field area

(c)  Top view

41

Notification
information

d

Main content

h

User "A"

# FIG. 22A

Information display apparatus — 30

- Screen — 38
- Rendering unit — 37
- Degree-of-association estimating unit — 35
- Application control unit — 36
- Degree-of-concentration estimating unit — 33
- User identifying unit — 31
- User state detecting unit — 32
- User information database — 34
- Degree-of-importance or-urgency obtaining unit — 39
- Notification source — 106
- User detecting camera — 102

EP 2 395 420 B1

# FIG. 22B

```
                    ( Start )
                        |
                        v
                   /  S301      \
                  < User identified? >---- No
                   \              /
                        | Yes
                        v
                 +---------------------------+  S302
                 | Detect user position      |
                 +---------------------------+
                        |
                        v
                 +---------------------------+  S303
                 | Detect face orientation/eye-gaze direction |
                 +---------------------------+
                        |
                        v
                 +---------------------------+  S304
                 | Determine user watching content |
                 +---------------------------+
                        |
                        v
                 +---------------------------+  S305
                 | Calculate center of distribution of gazing points |
                 +---------------------------+
                        |
                        v
                 +---------------------------+  S306
                 | Calculate degree of concentration |
                 +---------------------------+
                        |
                        v
                 +---------------------------+  S307
                 | Calculate allowable notification intensity based on degree of concentration |
                 +---------------------------+
                        |
                        v
                 +---------------------------+  S401
                 | Obtain degree of importance or urgency |
                 +---------------------------+
                        |
                        v
                   /  S402          \
                  < Is degree of importance or urgency smaller than threshold value "u"? >---- Yes
                   \                /
```

S402: Is degree of importance or urgency smaller than threshold value "u"?

- No → S404: Make the allowable notification intensity great
- Yes → S403: Make the allowable notification intensity small

S308: Calculate degree of association

S309: Is degree of association smaller than threshold value?

- No → S311: Make the allowable notification intensity great
- Yes → S310: Make the allowable notification intensity small

S312: Determine display parameter

S313: Display notification information based on display parameter

( End )

# FIG. 23A

Notification information: Washing machine completed operation

Notification information

User "A"

Main content

# FIG. 23B

Notification information: Visitor arrived

Notification information

FIG. 24A

FIG. 24B

FIG. 24C

# FIG. 25

(a)

102    30

19:00 News    41

User "A"

(b)

42
41

Notification information

(c)

42    41

Reshuffled Cabinet Launched

(d)

Cooking finished    41

42

Roller-coaster stock market continues

## FIG. 26A

User "A"

Main content
for user "A"

User "B"

Main content
for user "B"

## FIG. 26B

User "A"

User "B"

Main content for
users "A" and "B"

# FIG. 27A

Width "w1", Width "w2" > Distance "d1"

Area "A"　　　102　　　Area "B"　　　30

Distance "d1"

41　　42

Reshuffled Cabinet
Launched

Initial display position of
notification information　　User "A"　　Main content

Width "w1"　　　　Width "w2"

# FIG. 27B

Width "w1" < Distance "d1", Width "w2" > Distance "d1"

Area "A"　　　　　Area "B"　　　30

42

41

Reshuffled Cabinet
Launched

Distance "d1"

Width "w1"　　　　Width "w2"

# FIG. 27C

Width "w1", Width "w2" < Distance "d1"

Area "A"　　Area "B"　　30

42

41

Reshuffled Cabinet
Launched

Width "w1"　　Width "w2"　　Distance "d1"

## FIG. 28A

User "A"

## FIG. 28B

User "A"

# FIG. 29A

102

30

Reshuffled Cabinet

User "A"

Reshuffled Cabinet

# FIG. 29B

30

Reshuffled Cabinet

Reshuffled Cabinet

# FIG. 30A

# FIG. 30B

## FIG. 31A

User "A"

## FIG. 31B

## FIG. 31C

# FIG. 32

(a)

102                                                                    30

(b)

User "A"        ⬇        User "B"

Notification information        ⬇

(c)

(d)

19:00 News

**EP 2 395 420 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040098462 A1
- WO 2006009972 A1
- JP 2004266815 A
- JP 2001318747 A